# EUROPEAN PATENT SPECIFICATION

(11) **EP 4 279 450 B1**
(45) Date of publication and mention of the grant of the patent: **30.10.2024**
(21) Application number: 23173758.6
(22) Date of filing: 16.05.2023
(51) Int. Cl.: C01B 32/152, C01B 32/154, C01B 32/156

(54) **METAL INTERCALATED POLYMERIC FULLERENE, TWO-DIMENSIONAL POLYMERIC FULLERENE AND PREPARATION METHOD THEREOF**
METALLEINGELAGERTE POLYMERE FULLERENE, ZWEIDIMENSIONALE POLYMERE FULLERENE UND HERSTELLUNGSVERFAHREN DAFÜR
FULLERÈNE POLYMÈRE À INSERTION DE MÉTAL, FULLERÈNE POLYMÈRE À DEUX DIMENSIONS ET SON PROCÉDÉ DE PRÉPARATION

(30) Priority: 18.05.2022 CN 202210542519; 18.05.2022 CN 202210542986
(43) Date of publication of application: 22.11.2023
(73) Proprietor: INSTITUTE OF CHEMISTRY, CHINESE ACADEMY OF SCIENCES, Beijing 100190 (CN)
(72) Inventor: ZHENG, Jian, Haidian District, 100190 (CN); CUI, Xueping, Haidian District, 100190 (CN); HOU, Lingxiang, Haidian District, 100190 (CN); LUO, Lingxin, Haidian District, 100190 (CN)
(74) Representative: Novagraaf International SA

(56) References cited:
- TANAKA MASASHI ET AL: "Vapor-Phase Growth and Structural Characterization of Single Crystals of Magnesium Doped Two-Dimensional Fullerene Polymer Mg 2 C 60", CRYSTAL GROWTH & DESIGN, vol. 18, no. 7, 5 July 2018 (2018-07-05), US, pages 3877 - 3882, XP093090129, ISSN: 1528-7483, DOI: 10.1021/acs.cgd.8b00186
- PEI CUIYING ET AL: "Recent progress on high-pressure and high-temperature studies of fullerenes and related materials", MATTER AND RADIATION AT EXTREMES, AMERICAN INSTITUTE OF PHYSICS, 2 HUNTINGTON QUADRANGLE, MELVILLE, NY 11747, vol. 4, no. 2, 5 March 2019 (2019-03-05), XP012235961, ISSN: 2468-2047, [retrieved on 20190305], DOI: 10.1063/1.5086310
- ALAN L. BALCH ET AL: "Two-Component Polymeric Materials of Fullerenes and the Transition Metal Complexes: A Bridge between Metal–Organic Frameworks and Conducting Polymers", CHEMICAL REVIEWS, vol. 116, no. 6, 22 February 2016 (2016-02-22), US, pages 3812 - 3882, XP055261049, ISSN: 0009-2665, DOI: 10.1021/acs.chemrev.5b00553
- YUAN F ET AL: "Monolayer 2D polymeric fullerene: a new member of the carbon material family", INSPEC, THE INSTITUTION OF ELECTRICAL ENGINEERS, STEVENAGE, GB, 1 January 2022 (2022-01-01), XP002810268

## Description

### TECHNICAL FIELD

The present application relates to two-dimensional polymeric fullerene and especially to a metal intercalated polymeric fullerene and preparation methods thereof.

### BACKGROUND ART

Two-dimensional materials have attracted widespread attention owing to their unique electronic and optical properties generated by quantum confinement effects in their monolayers. Among them, two-dimensional carbon materials with unique π - electron systems are one of the main research objects. By changing the hybridization mode of carbon atoms, two-dimensional carbon materials can exhibit rich physical properties and have broad application prospects in transistor devices, energy storage materials, and superconducting materials.

So far, the reports on two-dimensional materials are limited to the periodic network structure interwoven by single atomic structural units, while the use of advanced structural units (such as clusters) to build two-dimensional structures is a new concept. These two-dimensional structures constructed from nanocluster structural units are expected to have superior topologies and distinct properties. Fullerenes (e.g. C₆₀) are typical carbon clusters. Under extremely high pressure, the polymerization of fullerene occurs by forming intercluster covalent bonds to produce a layered structure. Such a polymeric fullerene layer presents a regular topological structure of carbon clusters arranged repeatedly on the plane, which has interesting electronic and magnetic properties. However, due to the metastable nature at room temperature and pressure of the bulk polymeric fullerene prepared under extremely high pressure, conventional mechanical exfoliation methods have not been able to successfully prepare two-dimensional polymeric fullerene.

Tanaka Masashi et al., Crystal Growth & Design, 2018, Vol. 18, No. 7, pages 3877-3882 discloses single crystals of magnesium doped fullerene polymer Mg₂C₆ₒ can be directly grown via a binary vapor-phase mixture of Mg and C₆₀ in sealed glass tubes at elevated temperatures. This is the first single crystal, in metal-doped two-dimensional fullerene polymers, which enables precise Xray structural refinement. The Mg₂C₆₀ crystallizes in a monoclinic space group, I2/m, with lattice parameters of a =9.324(2) Å, b= 9.041(2) Å, c= 14.817(3) Å, and β=91.699(10)°. A Mg atom is located at each tetrahedral fullerene ball interstice, where the shortest Mg-C distance is 2.341(2) Å, suggesting that the Mg cation is in van der Waals contact with carbon p orbitals. The precise structure of the two-dimensional fullerene polymer network is characterized by comparison with structural data reported previously on powder samples.

Pei Cuiying et al., Matter and Radiation at Extremes, 2019, Vol. 4, No. 2 discloses various 1D, 2D, and 3D C₆₀ polymeric structures prepared under high pressure and high temperature (HPHT) have been studied, utilizing FTIR, Raman spectroscopy and XRD. C₇₀ a nonspherical carbon cage with lower symmetry than C₆₀, shares the general features of the latter with regard to polymerization, but its polymeric structures exhibit significantly fewer phases. A deeper understanding of the polymerization processes and phase diagrams of the fullerenes will help promote the synthesis of new polymeric forms with interesting and useful structural, electrical, magnetic, and photoluminescence properties. Based on a molecular engineering strategy, solvent molecules, CNTs, and metal atoms could be used to control the arrangement of carbon cages in the lattice. Under HPHT, the intercalated units dominate the evolution of the fullerene configuration, constrain polymerization behavior, and determine the structure and properties of the polymeric product. Further efforts are required so that the phase diagrams of these intercalated/doped fullerenes can be drawn. In addition, studies of intercalated/doped fullerenes at high P and very high T (>1000°C) present exciting opportunities to discover unique. carbon phases and even diamond-like polymeric structures.

Alan L. Balch et al., Chemical Reviews, 2016, Vol. 116, No. 6, pages 3812-3882 discloses the interactions of metal complexes and metal surfaces with fullerenes. That information has been related to the formation of redox-active materials produced by electrochemical reduction of solutions of various transition metal complexes and fullerene or fullerene adducts. These redox-active polymers are strongly bound to electrode surfaces and display electrochemical activity in solutions containing only supporting electrolyte. Extensive studies of the electrochemical behavior of these films have been used to characterize their properties and structure. The process that produces these poly-Pdₙ, C₆₀ and poly-Ptₙ, C₆₀ films can also produce composite materials that consist of metal nanoparticles interspersed with the poly-Pdₙ, C₆₀ and poly-Ptₙ, C₆₀ materials. The relationship between these redox-active films and conducting metal organic framework materials has been examined. These insoluble, redox-active polymers have potential utility for the adsorption of various gases, for the construction of capacitors, for sensing, for the preparation of metal-containing heterofullerenes, and for catalysis.

### SUMMARY OF THE INVENTION

In a first aspect, an embodiment of the present application provides a metal intercalated polymeric fullerene in accordance with claim 1.

The metal intercalated polymeric fullerene has a quasi-hexagonal crystal cell structure wherein, the metal is magnesium, lithium, potassium, or sodium, wherein, the quasi-hexagonal structure includes a central fullerene and six side fullerenes which surround the central fullerene and are arranged in a hexagonal shape, and bond with the central fullerene respectively.

According to an embodiment of the present application, the cell parameters of the crystal structure may be: a=17.57Å, b=9.17Å, c=16.00Å, α=90°, β=105.47°, γ=90°.

In a second aspect, an embodiment of the present application provides a preparation method of metal intercalated polymeric fullerene in accordance with claim 5.

The method includes reacting metal with fullerene to obtain metal intercalated polymeric fullerene; wherein, the molar ratio of the fullerene to the metal is 1:2 to 1:21.

According to an embodiment of the present application, the reaction temperature of the fullerene and the metal is 300 to 750 °C, and the metal is magnesium.

In a third aspect, an embodiment of the present application provides a two-dimensional polymeric fullerene in accordance with claim 6.

There is disclosed two types of two-dimensional polymeric fullerene.

According to an embodiment of the present application, the cell of the crystal structure of the two-dimensional polymeric fullerene comprises quasi-hexagonal structure, wherein the quasi-hexagonal structure includes a central fullerene and six side fullerenes, which surround the central fullerene and are arranged in a hexagonal shape.

The six side fullerenes include a first side fullerene, a second side fullerene, a third side fullerene, a fourth side fullerene, a fifth side fullerene, and a sixth side fullerene; the central fullerene is connected to each of the first side fullerene, the second side fullerene, the fourth side fullerene, and the fifth side fullerene through one C-C single bond respectively; the central fullerene is connected to each of the third side fullerene and the sixth side fullerene through two C-C single bonds respectively, and the four carbon atoms in the two C-C single bonds form a quaternary ring structure.

According to an embodiment of the present application, the cell of the crystal structure of the two-dimensional polymeric fullerene includes quadrilateral structure; in the quadrilateral structure, there are 8 fullerene clusters arranged around each central fullerene cluster, wherein 8 fullerene clusters are arranged in a cuboid shape, and each fullerene cluster is located at a vertex of the cuboid.

According to an embodiment of the present application, each fullerene cluster is connected with four fullerene clusters, and is connected with two of the fullerene clusters through one C-C single bond respectively, while is connected with the other two of the fullerene clusters through two C-C single bonds respectively, and the four carbon atoms in the two C-C single bonds form a quaternary ring structure.

In a fourth aspect, an embodiment of the present application provides a preparation method for two-dimensional polymeric fullerene in accordance with claim 8.

The preparation method is for preparing the two-dimensional polymeric fullerene, comprising the following steps:
providing metal intercalated polymeric fullerenes; and
replacing metal ions in the metal intercalated polymeric fullerene with quaternary ammonium salts.

According to an embodiment of the present application, the metal intercalated polymeric fullerene is the aforementioned metal intercalated polymeric fullerene.

According to an embodiment of the present application, another type of metal intercalated polymeric fullerene has a monoclinic crystal system crystal structure, and its cell structure has a quadrilateral structure, the cell parameters of the crystal structure are: a=9.31Å, b=9.03Å, c=14.78Å, α=90°, β=91.70°, γ=90°; and/or,

The metal intercalated polymeric fullerene is magnesium intercalated polymeric fullerene or lithium intercalated polymeric fullerene or sodium intercalated polymeric fullerene or potassium intercalated polymeric fullerene.

According to an embodiment of the present application, the structural formula of the quaternary ammonium salts is as follows: 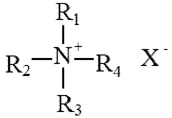 wherein R₁, R₂, R₃ and R₄ are independently selected from alkyl groups containing 2-8 carbon atoms, with X⁻ being salicylate ions, fluoride ions, bromine ions, or 8-hydroxyquinoline anions or other anions with coordination ability with metal ions, and the metal ions are magnesium ions, lithium ions, potassium ions, or sodium ions.

Furthermore, R₁, R₂, R₃ and R₄ are independently selected from alkyl groups containing 2-4 carbon atoms or alkyl groups containing 7-8 carbon atoms.

According to an embodiment of the present application, the quaternary ammonium salts can be one or more of tetrabutylsalicylic acid ammonium, tetrabutylammonium fluoride, tetrabutylammonium bromide, or 8-hydroxyquinoline tetrabutylamine salts.

According to an embodiment of the present application, the method includes: mixing metal intercalated polymeric fullerene with a quaternary ammonium salt solution, and standing for 1 day-1 month.

According to an embodiment of the present application, solvents of the quaternary ammonium salt solution are aprotic solvents.

According to an embodiment of the present application, the solvents of the quaternary ammonium salt solution include one or more of N-methylpyrrolidone (NMP), N,N-dimethylformamide (DMF), or acetonitrile.

There is also disclosed a polymeric fullerene crystal, wherein adjacent fullerene molecules are connected by covalent bonds, showing a regular topological structure of repeated cluster arrangement, without metal intercalated.

According to an embodiment of the present application, the two-dimensional polymeric fullerenes have stable chemical properties and will not decompose under ambient pressure.

In a further aspect, an embodiment of the present application provides applications of aforementioned metal intercalated polymeric fullerene and aforementioned two-dimensional polymeric fullerene in superconducting materials, field effect transistors, electronics, catalysis, or energy storage fields.

Compared with the prior art, the present application can achieve at least one of the following beneficial effects:
1. The metal intercalated polymeric fullerene of an embodiment of the present application has the characteristics of large size and high crystallinity.
2. The preparation method of two-dimensional polymeric fullerene of an embodiment of the present application has the advantages of simple process and low cost, and can achieve large-scale preparation of various two-dimensional polymeric fullerenes.
3. The two-dimensional polymeric fullerene of an embodiment of the present application has the characteristics of large size and high crystallinity.

In the present application, the above technical schemes can also be combined with each other to realize more preferred combination schemes. Other features and advantages of the present application will be described in the following instructions, and some advantages may become apparent from the instructions or be understood by implementing the present application. The object and other advantages of the present application can be realized and obtained through the contents specially pointed out in the instructions and the accompanying drawings.

### BRIEF DESCRIPTION OF DRAWINGS

The drawings are only to show specific embodiments and are not considered as a limitation of the present application. Wherein:
FIG. 1 is a scanning electron microscope image of the bulk magnesium intercalated polymeric fullerene crystal prepared in Embodiment 1 of the present application;
FIG. 2 is a schematic diagrams of a single crystal structure of the bulk magnesium intercalated polymeric fullerene prepared in Embodiment 1 of the present application;
FIG. 3 is a schematic diagrams of a interlayer structure of the bulk magnesium intercalated polymeric fullerene prepared in Embodiment 1 of the present application;
FIG. 4 is a Raman spectrum of the bulk magnesium intercalated polymeric fullerene prepared in Embodiment 1 of the present application;
FIG. 5 is an optical microscope image of the monolayer two-dimensional polymeric fullerene prepared in Embodiment 1 of the present application;
FIG. 6 is an atomic force microscope image of the monolayer two-dimensional polymeric fullerene prepared in Embodiment 1 of the present application;
FIG. 7 is a scanning transmission electron microscope image of the monolayer two-dimensional polymeric fullerene prepared in Embodiment 1 of the present application;
FIG. 8 is a photograph of the monolayer two-dimensional polymeric fullerene dispersion prepared in Embodiment 1 of the present application;
FIG. 9 is a transfer characteristic curve of the transistor of two-dimensional polymeric fullerene prepared in Embodiment 1 of the present application;
FIG. 10 is an output characteristic curve of the transistor of two-dimensional polymeric fullerene prepared in Embodiment 1 of the present application;
FIG. 11 is the Raman spectra of monolayer polymeric fullerene deposited on the substrate surface before and after heating at 600K for 10 minutes in Embodiment 1 of the present invention;
FIG. 12 is a scanning electron microscope image of the bulk magnesium intercalated polymeric fullerene prepared in Embodiment 2 of the present application;
FIG. 13 is an optical microscope image of the monolayer two-dimensional polymeric fullerene prepared in Embodiment 2 of the present application;
FIG. 14 is a scanning electron microscope image of the bulk magnesium intercalated polymeric fullerene prepared in Embodiment 2-1 of the present application;
FIG. 15 is a scanning electron microscope image of the bulk magnesium intercalated polymeric fullerene prepared in Embodiment 2-3 of the present application;
FIG. 16 is an optical microscope image of the monolayer two-dimensional polymeric fullerene prepared in Embodiment 3 of the present application;
FIG. 17 is a scanning electron microscope image of the bulk magnesium intercalated polymeric fullerene prepared in Embodiment 3-1 of the present application;
FIG. 18 is a scanning electron microscope image of the bulk magnesium intercalated polymeric fullerene prepared in Embodiment 3-2 of the present application;
FIG. 19 is an optical microscope image of the monolayer two-dimensional polymeric fullerene prepared in Embodiment 4 of the present application;
FIG. 20 is a scanning electron microscope image of the bulk magnesium intercalated polymeric fullerene prepared in Embodiment 4-1 of the present application;
FIG. 21 is a scanning electron microscope image of the bulk magnesium intercalated polymeric fullerene prepared in Embodiment 4-2 of the present application;
FIG. 22 is an optical microscope image of the monolayer two-dimensional polymeric fullerene prepared in Embodiment 5 of the present application;
FIG. 23 is an optical microscope image of the monolayer two-dimensional polymeric fullerene prepared in Embodiment 5-1 of the present application;
FIG. 24 is an optical microscope image of the two-dimensional polymeric fullerene prepared in Embodiment 5-1 of the present application;
FIG. 25 is an optical microscope image of the two-dimensional polymeric fullerene prepared in Embodiment 6 of the present application;
FIG. 26 is an optical microscope image of the two-dimensional polymeric fullerene prepared in Embodiment 6-1 of the present application;
FIG. 27 is a photo of the two-dimensional polymeric fullerene dispersion prepared in Embodiment 6-1 of the present application;
FIG. 28 is a photo of the monolayer two-dimensional polymeric fullerene dispersion prepared in Embodiment 6-2 of the present application;
FIG. 29 is an optical microscope image of the monolayer two-dimensional polymeric fullerene prepared in Embodiment 7 of the present application;
FIG. 30 is an optical microscope image of the two-dimensional polymeric fullerene prepared in Embodiment 7-1 of the present application;
FIG. 31 is an optical microscope image of the two-dimensional polymeric fullerene prepared in Embodiment 7-2 of the present application;
FIG. 32 is a transport characteristic curve of the transistor of monolayer two-dimensional polymeric fullerene prepared in Embodiment 9 of the present application;
FIG. 33 is a scanning electron microscope image of the bulk magnesium intercalated polymeric fullerene prepared in Embodiment 10 of the present application;
FIG. 34 is a schematic diagram of a interlayer structure of the bulk magnesium intercalated polymeric fullerene prepared in Embodiment 10 of the present application;
FIG. 35 is a schematic diagram of a single crystal structure of the bulk magnesium intercalated polymeric fullerene prepared in Embodiment 10 of the present application;
FIG. 36 is a Raman spectrum of the bulk magnesium intercalated polymeric fullerene prepared in Embodiment 10 of the present application;
FIG. 37 is an optical microscope image of the two-dimensional polymeric fullerene prepared in Embodiment 10 of the present application;
FIG. 38 is an atomic force microscope image of the two-dimensional polymeric fullerene prepared in Embodiment 10 of the present application;
FIG. 39 is a scanning transmission electron microscope image of the two-dimensional polymeric fullerene prepared in Embodiment 10 of the present application;
FIG. 40 is a photo of the two-dimensional polymeric fullerene dispersion prepared in Embodiment 10 of the present application;
FIG. 41 is a transfer characteristic curve of the transistor of two-dimensional polymeric fullerene prepared in Embodiment 10 of the present application;
FIG. 42 is an output curve of the transistor of two-dimensional polymeric fullerene prepared in Embodiment 10 of the present application;
FIG. 43 is an optical microscope image of the two-dimensional polymeric fullerene prepared in Embodiment 11 of the present application;
FIG. 44 is an optical microscope image of the bulk sodium intercalated polymeric fullerene prepared in Embodiment 11-1 of the present application;
FIG. 45 is an optical microscope image of the bulk potassium intercalated polymeric fullerene prepared in Embodiment 11-2 of the present application;
FIG. 46 is an optical microscope image of the two-dimensional polymeric fullerene prepared in Embodiment 13 of the present application;
FIG. 47 is an optical microscope image of the two-dimensional polymeric fullerene prepared in Embodiment 13-2 of the present application;
FIG. 48 is a photo of the two-dimensional polymeric fullerene dispersion prepared in Embodiment 13-3 of the present application.

### DETAILED DESCRIPTION OF THE INVENTION

The preferred embodiments of the present application are described in detail below in combination with the accompanying drawings. The accompanying drawings form part of the application and, together with the embodiments of the present application, are used to explain the principle of the present application, not to limit the scope of the present application.

An embodiment of the present application provides a metal intercalated polymeric fullerene with a monoclinic crystal structure.

In one embodiment, the metal used for intercalation can be magnesium or lithium or potassium or sodium.

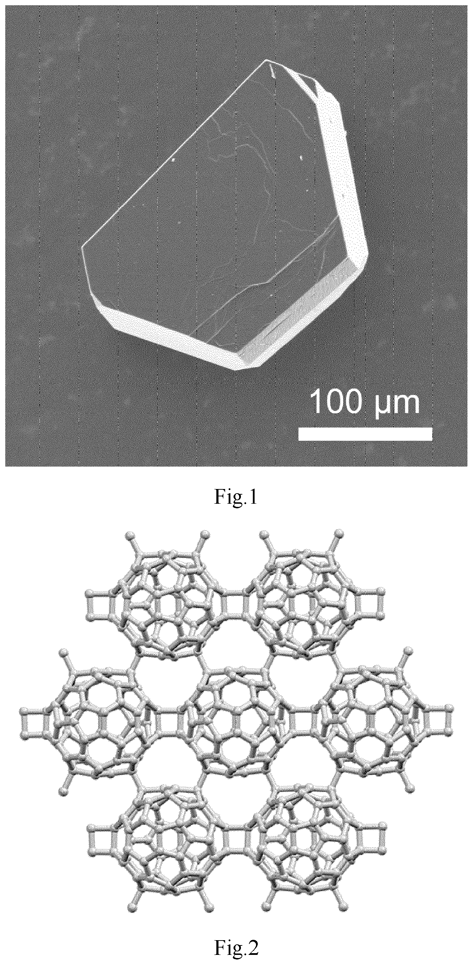

In an embodiment, the cell of crystal structure of metal intercalated polymeric fullerene includes a quasi-hexagonal structure, as shown in Figure 2. The quasi-hexagonal structure includes a central fullerene and six side fullerenes, which surround the central fullerene and are arranged in a hexagonal shape, and bond with the central fullerene respectively. Furthermore, the central fullerene is connected to four of the side fullerenes through one C-C single bond respectively, and to two of the side fullerenes through two C-C single bonds respectively.

In one embodiment, as shown in Figure 2, the six side fullerenes include a first side fullerene, a second side fullerene, a third side fullerene, a fourth side fullerene, a fifth side fullerene, and a sixth side fullerene. In Figure 2, the top left corner is the first side fullerene, and the top right corner is the second side fullerene. Around the center fullerene, in a clockwise direction, there are the third side fullerene, the fourth side fullerene, the fifth side fullerene, and the sixth side fullerene, that is, the first side fullerene is adjacent to the second side fullerene and the sixth side fullerene, and the center fullerene is roughly on the same straight line as the third side fullerene and sixth side fullerene.

Furthermore, the central fullerene is connected to each of the first side fullerene, the second side fullerene, the fourth side fullerene, and the fifth side fullerene through one C-C single bond respectively. The C-C single bond between the central fullerene and the first side fullerene, and the C-C single bond between the central fullerene and the fourth side fullerene, are located on the same straight line, The C-C single bond between the central fullerene and the second side fullerene, and the C-C single bond between the central fullerene and the fifth side fullerene, are located in the same straight line. The angle between the C-C single bond between the central fullerene and the first side fullerene and the C-C single bond between the central fullerene and the second side fullerene is approximately 60 °.

Furthermore, the central fullerene is connected to each of the third side fullerene and the sixth side fullerene through two C-C single bonds (which can be formed by 2+2 cycloaddition reaction) respectively, the four carbon atoms connected in the two C-C single bonds form a quaternary ring structure, and the angle between the two C-C single bonds and the above single bonds is about 60 °.

In one embodiment, the cell parameters of the metal intercalated polymeric fullerene crystal are: a=17.57Å, b=9.17Å, c=16.00Å, α=90°, β=105.47°, γ=90°.

In one embodiment, in the metal intercalated polymeric fullerene, adjacent fullerene molecules are connected with each other through covalent bond, showing a regular topological structure of repeated cluster arrangement.

In one embodiment, the metal intercalated polymeric fullerene crystal has a quasi-hexagonal structure, such as the quasi-hexagonal structure shown in Figure 2.

In one embodiment, the thickness of the metal intercalated polymeric fullerene is greater than or equal to 10 microns, further ranging from 10 to 1000 microns, and further ranging from 50 to 900 microns, such as 60 microns, 70 microns, 80 microns, 90 microns, 100 microns, 200 microns, 300 microns, 400 microns, 500 microns, 600 microns, 700 microns, and 800 microns.

An embodiment of the present application provides a preparation method of metal intercalated polymeric fullerene, including: Reacting metal with fullerene to obtain metal intercalated polymeric fullerene; Wherein, the molar ratio of fullerene to metal is 1:2 to 1:21, such as 1:2, 1:4, 1:6, 1:8, 1:10, 1:12, 1:13, 1:14, 1:15, 1:16, 1:17, 1:18, 1:19, 1:20.

In one embodiment, the metal reacted with fullerene can be magnesium to obtain magnesium intercalated polymeric fullerene; Lithium can be used to prepare lithium intercalated polymeric fullerene; Potassium can be used to prepare potassium intercalated polymeric fullerene; Sodium can be used to prepare sodium intercalated polymeric fullerene.

In one embodiment, the reaction temperature of magnesium and fullerene can range from 300 to 750 °C, such as 320 °C, 400 °C, 500 °C, 580 °C, 650 °C, 750 °C; the reaction time can range from 0.5 hours to 10 days, such as 0.5 hours, 12 hours, 21 hours, 3 days, and 8 days.

An embodiment of the present application provides a synthesis method for two-dimensional carbon materials, including the following steps:
S1: Metal reacts with precursor to form metal intercalated carbon crystals; and
S2: Exfoliate the metal intercalated carbon crystals to form the two-dimensional carbon materials.

According to one embodiment of the present application, the exfoliating metal carbon compound crystals includes replacing metal ions in the metal intercalated carbon crystals with quaternary ammonium salts.

According to one embodiment of the present application, the metal intercalated carbon crystals include the metal intercalated polymeric fullerene (bulk/block), or metal intercalated polymeric fullerene (bulk/block) prepared by the above method.

According to one embodiment of the present application, the two-dimensional carbon materials include two-dimensional polymeric fullerene.

The preparation method of the two-dimensional polymeric fullerene according to an embodiment of the present application involves using quaternary ammonium salts to coordinate with bulk metal intercalated polymeric fullerene, replacing metal ions intercalated in the polymeric fullerene, and exfoliating the bulk materials into two-dimensional materials to obtain exfoliated thin layered two-dimensional polymeric fullerene.

The preparation method of the two-dimensional polymeric fullerene according to an embodiment of the present application first involves doping fullerene with metal to polymerize fullerene monomers (doping polymerization), resulting in block shaped metal intercalated polymeric fullerene; Then, use quaternary ammonium salts to coordinate with the polymeric fullerene, replacing metal ions intercalated in the polymeric fullerene, and exfoliating the bulk materials into two-dimensional materials to obtain thin layered two-dimensional polymeric fullerene.

In one embodiment, a metal intercalated polymeric fullerene prepared by the above method has a monoclinic crystal structure. Its cell can be as shown in Figure 2. The cell structure is quasi-hexagonal, that is, one central fullerene and six side fullerenes. The six side fullerenes surround the central fullerene and are arranged in a quasi-hexagonal shape, and bond with the central fullerene respectively. The metal is magnesium.

In one embodiment, in the substitution of metal ions of metal intercalated polymeric fullerene by quaternary ammonium salts, the mass ratio of quaternary ammonium salts to metal intercalated polymeric fullerene is 5:1 to 20:1, such as 6:1, 8:1, 10:1, 12:1, 15:1, 16:1, 18:1.

In one embodiment, the structural formula of the quaternary ammonium salts is as follows:

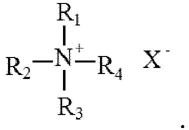

R₁, R₂, R₃ and R₄ are independently selected from alkyl groups containing 2-8 carbon atoms, with X⁻ being salicylate ions, fluoride ions, bromine ions, or 8-hydroxyquinoline anions or other anions with coordination ability with metal ions, and the metal ions are magnesium ions, lithium ions, potassium ions, or sodium ions.

In one embodiment, the number of carbon atoms contained in R₁, R₂, R₃ and R₄ can be 3, 4, 5, 6, or 7.

In one embodiment, R₁, R₂, R₃ and R₄ are independently selected from linear alkyl groups containing 2-8 carbon atoms.

In one embodiment, R₁, R₂, R₃ and R₄ are independently selected from alkyl groups containing 2-4 carbon atoms or alkyl groups containing 7-8 carbon atoms; Furthermore, R₁, R₂, R₃ and R₄ are independently selected from linear alkyl groups containing 2-4 carbon atoms or 7-8 carbon atoms.

In one embodiment, R₁, R₂, R₃ and R₄ are the same functional groups, such as n-butyl.

In one embodiment, the quaternary ammonium salt can be one or more of tetrabutylsalicylic acid ammonium, tetrabutylammonium fluoride, tetrabutylammonium bromide, or 8-hydroxyquinoline tetrabutylamine salts.

In one embodiment, the substitution of metal ions of metal intercalated polymeric fullerene by quaternary ammonium salts includes: mixing the metal intercalated polymeric fullerene with a quaternary ammonium salt solution, and standing at a temperature of 20-30 °C (such as 22 °C, 24 °C, 25 °C, 26 °C, 28 °C) for 1 day to 1 month (such as 3 days, 10 days, 20 days). Afterwards, shake the solution system and then centrifuge to remove the sediment; Wash the obtained dispersion and centrifuge to remove the supernatant to obtain a dispersion containing two-dimensional polymeric fullerene flakes.

In one embodiment, the solvent of the quaternary ammonium salt solution can be an aprotic solvent, such as N-methylpyrrolidone (NMP), N, N-dimethylformamide (DMF), or acetonitrile. Due to the relatively stable presence of the exfoliated two-dimensional polymeric fullerene flakes in aprotic solvents, the solvent of the quaternary ammonium salt solution is preferably an aprotic solvent, and further preferably N-methylpyrrolidone.

In one embodiment, the two-dimensional polymeric fullerene has a monolayer structure with a thickness of a single molecular layer, approximately 1.22 nm.

An embodiment of the present application provides a two-dimensional polymeric fullerene which is prepared by the above method.

The two-dimensional polymeric fullerene of one embodiment of the present application has a larger lateral size, such as a maximum size of 30-60 microns; The larger lateral size enables the convenient application of two-dimensional polymeric fullerene in various fields, such as field-effect transistors.

The two-dimensional polymeric fullerene of one embodiment of the present application can stably exist in a dispersion system.

One implementation method of the present application utilizes metal doping to polymerize fullerene, resulting in a polymeric fullerene block material that can stably exist at room temperature and pressure; Furthermore, by exfoliating bulk polymeric fullerene with quaternary ammonium salt solution, the damage to the polymer structure is minimal and a good two-dimensional polymerization framework structure can be maintained.

The two-dimensional polymeric fullerene of one embodiment of the present application has stable chemical properties (or stable structure) and will not decompose under ambient pressure.

The preparation method of the two-dimensional polymeric fullerene according to an embodiment of the present application can obtain different types of two-dimensional polymeric fullerene by regulating the anions of quaternary ammonium salts.

The two-dimensional polymeric fullerene of one embodiment of the present application has advantages such as large size, thin thickness, high crystallinity, and structural stability, and has broad application prospects in fields such as electronics, catalysis, and energy storage.

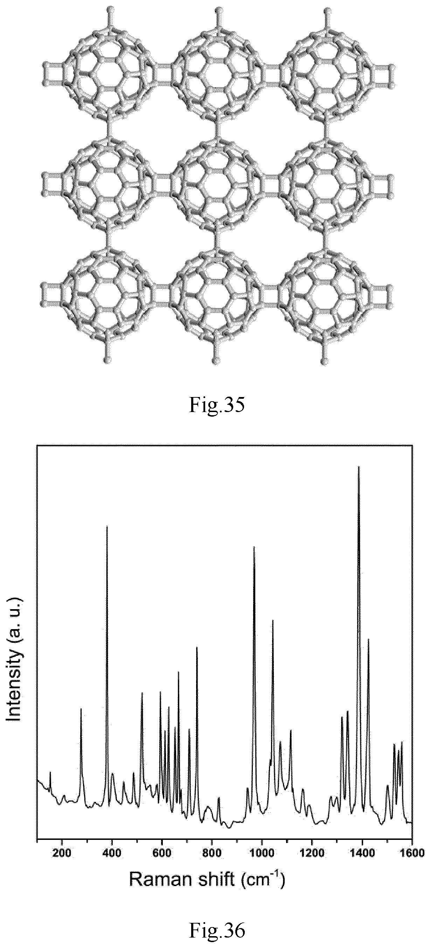

In one embodiment, the metal intercalated polymeric fullerene has a monoclinic crystal structure, and its cell can be a quasi-tetragonal structure as shown in Figure 35, that is, there are 8 fullerene clusters arranged around each central fullerene cluster, 8 fullerene clusters are arranged in a cuboid shape, and each fullerene cluster is located at a vertex of the cuboid.

In one embodiment, the cell parameters of the metal intercalated polymeric fullerene crystal are: a=9.31Å, b=9.03Å, c=14.78Å, α=90°, β=91.70°, γ=90°.

In one embodiment, the thickness of the metal intercalated polymeric fullerene is greater than or equal to 10 microns, further ranging from 10 to 1000 microns, and further ranging from 50 to 900 microns, such as 60 microns, 70 microns, 80 microns, 90 microns, 100 microns, 200 microns, 300 microns, 400 microns, 500 microns, 600 microns, 700 microns, and 800 microns.

In one embodiment, the metal used for doping can be magnesium or lithium or potassium or sodium, to obtain magnesium intercalated polymeric fullerene or lithium intercalated polymeric fullerene or potassium intercalated polymeric fullerene or sodium intercalated polymeric fullerene.

In one embodiment, in step S1, the molar ratio of fullerene to metal used is 1:9.

In one embodiment, in step S1, a reaction temperature of metal and fullerene can be between 580-600 °C, such as 585 °C, 590 °C, 595 °C; a reaction time can be 20-24 hours, such as 21 hours, 22 hours, and 23 hours.

In one embodiment, in step S2, the mass ratio of quaternary ammonium salt to metal intercalated polymeric fullerene is 5:1 to 20:1, such as 6:1, 8:1, 10:1, 12:1, 15:1, 16:1, 18:1.

In one embodiment, the structural formula of the quaternary ammonium salt is as follows:

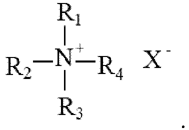

R₁, R₂, R₃ and R₄ are independently selected from alkyl groups containing 2-8 carbon atoms, with X⁻ being salicylate ions, fluoride ions, bromine ions, or 8-hydroxyquinoline anions.

In one embodiment, the number of carbon atoms contained in R₁, R₂, R₃ and R₄ can be 3, 4, 5, 6, or 7.

In one embodiment, R₁, R₂, R₃ and R₄ are independently selected from linear alkyl groups containing 2-8 carbon atoms.

In one embodiment, R₁, R₂, R₃ and R₄ are independently selected from alkyl groups containing 2-4 carbon atoms or alkyl groups containing 7-8 carbon atoms; Furthermore, R₁, R₂, R₃ and R₄ are independently selected from linear alkyl groups containing 2-4 carbon atoms or 7-8 carbon atoms.

In one embodiment, R₁, R₂, R₃ and R₄ are the same functional groups, such as n-butyl.

In one embodiment, the quaternary ammonium salts can be one or more of tetrabutylsalicylic acid ammonium, tetrabutylammonium fluoride, tetrabutylammonium bromide, or 8-hydroxyquinoline tetrabutylamine salts.

In one embodiment, step S2 includes: mixing metal intercalated polymeric fullerene with a quaternary ammonium salt solution, and standing at a temperature of 20-30 °C (such as 22 °C, 24 °C, 25 °C, 26 °C, 28 °C) for 1 day-1 month (such as 3 days, 10 days, 20 days).

In one embodiment, solvents of the quaternary ammonium salt solution can be aprotic solvents, such as N-methylpyrrolidone (NMP), N,N-dimethylformamide (DMF), or acetonitrile. Due to the relatively stable presence of the exfoliated two-dimensional polymeric fullerene in aprotic solvents, the solvents of the quaternary ammonium salt solution are preferably aprotic solvents, and further preferably N-methylpyrrolidone.

In one embodiment, step S2 includes: mixing a metal intercalated polymeric fullerene with a quaternary ammonium salt solution, and standing at a temperature of 20-30 °C for 1 day-1 month; Afterwards, shake the solution system and then centrifuge to remove the sediment; Wash the obtained dispersion and centrifuge to remove the supernatant to obtain a turbid solution containing two-dimensional polymeric fullerene.

In one embodiment, the two-dimensional polymeric fullerene has a thin layer structure of less than 5nm, with a thickness of, for example, 2-3nm.

An embodiment of the present application provides a two-dimensional polymeric fullerene which is prepared by the above method.

The two-dimensional polymeric fullerene of one embodiment of the present application has a larger lateral size, such as a length that can be greater than 20 microns; the larger lateral size enables the convenient application of two-dimensional polymeric fullerene in various fields, such as field-effect transistors.

The two-dimensional polymeric fullerene of one embodiment of the present application can stably exist in a dispersion system.

One implementation method of the present application utilizes metal intercalation (doping) to polymerize fullerene, resulting in a polymeric fullerene block material that can stably exist at room temperature and pressure; Furthermore, by exfoliating polymeric fullerene blocks with quaternary ammonium salt solution, the damage to the polymer structure is minimal and a good two-dimensional polymerization framework structure can be maintained.

The two-dimensional polymeric fullerene of one embodiment of the present application has stable chemical properties (or stable structure) and will not decompose under ambient pressure.

The preparation method of the two-dimensional polymeric fullerene according to an embodiment of the present application can obtain different types of two-dimensional polymeric fullerene by regulating the anions of quaternary ammonium salts.

The two-dimensional polymeric fullerene of one embodiment of the present application has advantages such as large size, thin thickness, high crystallinity, and structural stability, and has broad application prospects in fields such as electronics, catalysis, and energy storage.

The metal intercalated polymeric fullerene, two-dimensional polymeric fullerene and preparation method thereof of one embodiment of the present application will further be explained below, in conjunction with the accompanying drawings and specific embodiments. Wherein, a quartz tube used has a diameter of 20mm and a length of 400mm.

### Embodiment 1

S1: Add 500mg of C₆₀ and 275mg of magnesium powder (the molar ratio is 1:16.5) to a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 500 °C region; Take out the heated quartz tube and remove the sample from the quartz tube in the argon glove box to obtain quasi-hexagonal magnesium intercalated polymeric C₆₀ blocks, as shown in Figure 1. The cell parameters of the magnesium intercalated polymeric C₆₀ blocks are measured to be: a=17.57Å, b=9.17Å, c=16.00Å, α=90°, β=105.47°, γ=90°.

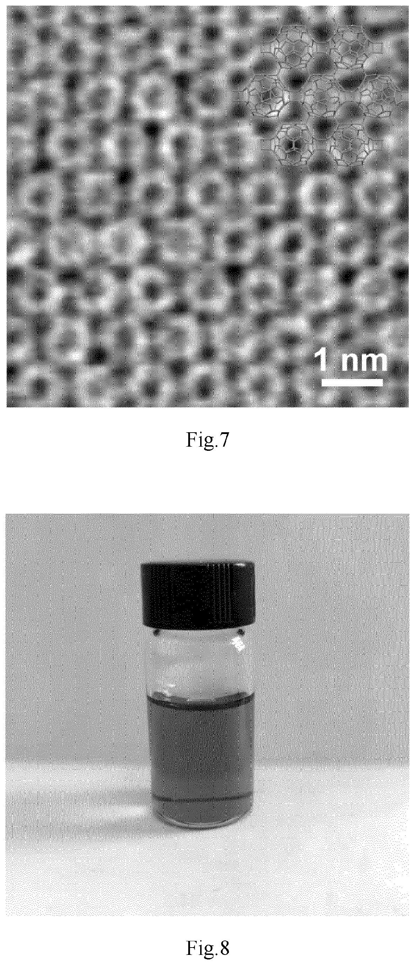

S2: Dissolve 0.2g of tetrabutylsalicylic acid ammonium in 20mL of N-methylpyrrolidone to obtain a clear solution, and add 20mg of the magnesium intercalated polymeric C₆₀ blocks to the N-methylpyrrolidone solution; Shake the solution system vigorously after left it to stand for 7 days and remove any precipitates in the system. Then centrifuge the resulting dispersion after wash it with 20mL of N-methylpyrrolidone. After removing the supernatant, a dispersion of monolayer polymeric C₆₀ with a size greater than 30 µm is obtained. After placing the obtained dispersion at room temperature for 7 days, its photo is shown in Figure 8. It can be see that there is no obvious precipitation in the picture, indicating that the dispersion system can exist stably.

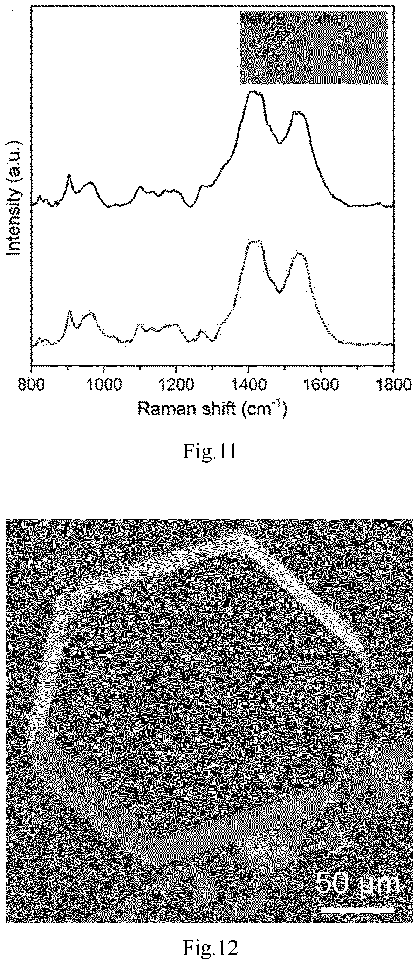

By dropping the aforementioned monolayer polymeric C₆₀ dispersion droplets onto a substrate (such as Si/SiO₂, quartz, sapphire, gold and etc.) and allowing the solvent to evaporate, a monolayer polymeric fullerene deposited on the surface of the substrate is obtained. Heating the monolayer polymeric fullerene at 600K for 10 minutes showed almost no change in its Raman spectra, as shown in Figure 11, proving the good thermal stability of the monolayer polymeric fullerene. Characterize the monolayer polymeric C₆₀ by high-resolution scanning transmission electron microscopy, its result is shown in Figure 7. It can be seen that the fullerene layer still exhibits a regular topological structure of carbon clusters arranged repeatedly on the plane.

### Embodiment 2

S1: Add 500mg of C₆₀ and 225mg of magnesium powder (the molar ratio is 1:13.5) into a quartz tube in an argon glove box, and vacuum seal the quartz tube; Take the quartz tube out of the glove box and heat it in a dual temperature zone high-temperature reaction furnace for 20 hours. The sample reacts at 580 °C region and grows crystals at 500 °C region; Take out the heated quartz tube and remove the sample from the quartz tube in the argon glove box to obtain quasi-hexagonal magnesium intercalated polymeric C₆₀ blocks, as shown in Figure 12.

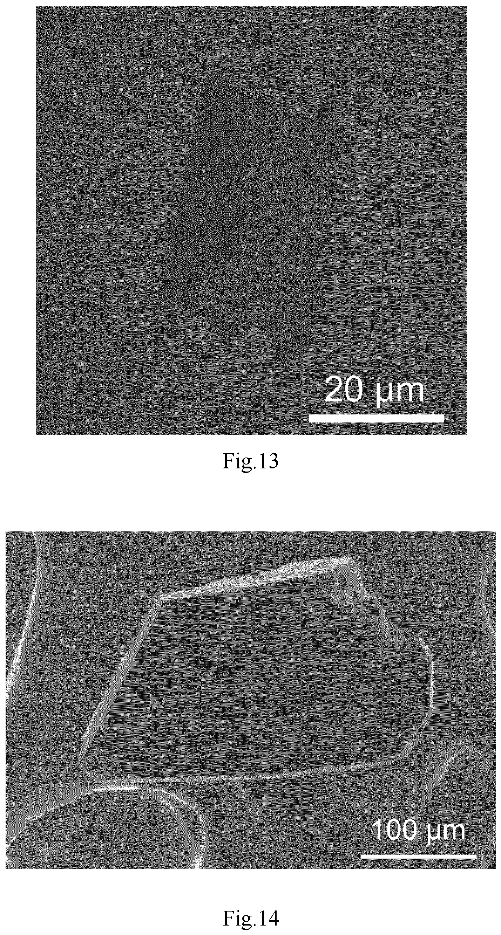

S2: Dissolve 0.3g of tetrabutylammonium fluoride in 20mL of N-methylpyrrolidone to obtain a clear solution, and add 25mg of the magnesium intercalated polymeric C₆₀ blocks to the N-methylpyrrolidone solution; Shake the solution system vigorously after left it to stand for 5 days and remove any precipitates in the system. Then centrifuge the dispersion after wash it with 20mL of N-methylpyrrolidone. After removing the supernatant, a dispersion of monolayer polymeric C₆₀ with a size greater than 30 µm is obtained. Figure 13 is an optical microscope image of the prepared monolayer two-dimensional polymeric fullerene deposited on the substrate.

### Embodiment 2-1

This embodiment adopts the same raw materials and steps as Embodiment 2 to prepare magnesium intercalated polymeric C₆₀ blocks and two-dimensional polymeric C₆₀ dispersion, with the only difference being that the molar ratio of C₆₀ to magnesium powder used in step S1 is 1:2 and the sample reacts at 750 °C region. Figure 14 is a scanning electron microscope image of the prepared magnesium intercalated polymeric C₆₀ blocks.

### Embodiment 2-2

This embodiment adopts the same raw materials and steps as Embodiment 2 to prepare magnesium intercalated polymeric C₆₀ blocks and two-dimensional polymeric C₆₀ dispersion, with the only difference being that the molar ratio of C₆₀ to magnesium powder used in step S1 is 1:7 and the sample reacts at 700 °C region.

### Embodiment 2-3

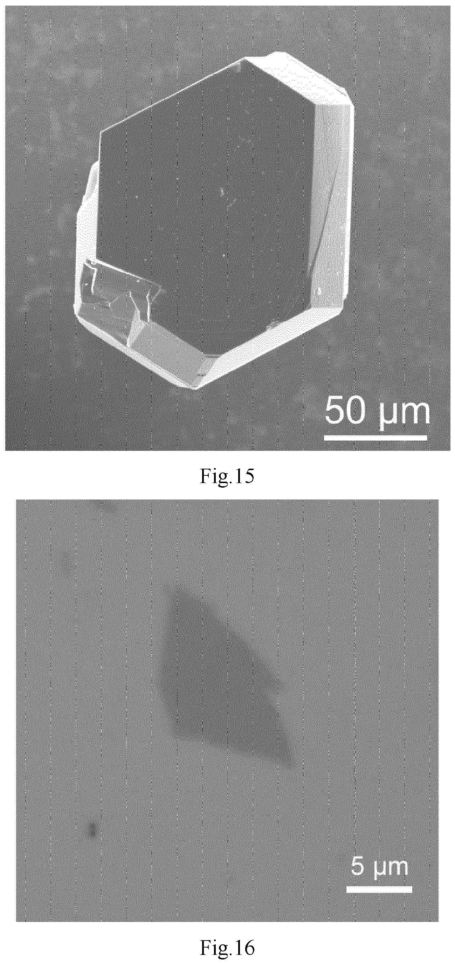

This embodiment adopts the same raw materials and steps as Embodiment 2 to prepare magnesium intercalated polymeric C₆₀ blocks and two-dimensional polymeric C₆₀ dispersion, with the only difference being that the molar ratio of C₆₀ to magnesium powder used in step S1 is 1:18. Figure 15 is a scanning electron microscope image of the prepared magnesium intercalated polymeric C₆₀ blocks using this ratio.

### Embodiment 2-4

This embodiment adopts the same raw materials and steps as Embodiment 2 to prepare magnesium intercalated polymeric C₆₀ blocks and two-dimensional polymeric C₆₀ dispersion, with the only difference being that the molar ratio of C₆₀ to magnesium powder used in step S1 is 1:21.

### Embodiment 2-5

This embodiment adopts the same raw materials and steps as Embodiment 2 to prepare magnesium intercalated polymeric C₆₀ blocks and two-dimensional polymeric C₆₀ dispersion, with the only difference being that the molar ratio of C₆₀ to magnesium powder used in step S1 is 1:9 and the sample reacts at 660 °C region.

### Embodiment 2-6

This embodiment adopts the same raw materials and steps as Embodiment 2 to prepare magnesium intercalated polymeric C₆₀ blocks and two-dimensional polymeric

C₆₀ dispersion, with the only difference being that the magnesium intercalated polymeric C₆₀ solution system in step S2 is left to stand for 1 day, resulting in a dispersion of two-dimensional polymeric C₆₀ with a thickness of 2-5nm.

### Comparative Embodiment 1

This embodiment uses the same raw materials and steps as Step S1 in Embodiment 2 to prepare magnesium intercalated polymeric C₆₀ blocks, with the only difference being that the molar ratio of C₆₀ to magnesium powder used is 1:1. After the reaction is completed, no hexagonal crystals are generated in the growth area of the quartz tube.

### Comparative Embodiment 2

This embodiment uses the same raw materials and steps as Step S1 in Embodiment 2 to prepare magnesium intercalated polymeric C₆₀ blocks, with the only difference being that the molar ratio of C₆₀ to magnesium powder used is 1:25. After the reaction is completed, no hexagonal crystals are generated in the growth area of the quartz tube.

### Embodiment 3

S1: Add 500mg C₆₀ and 316 mg magnesium powder (the molar ratio is 1:19) into a quartz tube in an argon glove box, and vacuum seal the quartz tube; Take the quartz tube out of the glove box and heat it in a dual temperature zone high-temperature reaction furnace for 5 days. The sample reacts at 600 °C region and grows crystals at 480 °C region; Take out the heated quartz tube and remove the sample from the tube in an argon glove box, obtaining quasi-hexagonal magnesium intercalated polymeric fullerene blocks.

S2: Dissolve 0.2g of 8-hydroxyquinoline tetrabutylamine salt in 20mL of N-methylpyrrolidone to obtain a clear solution, and add 20mg of the magnesium intercalated polymeric fullerene blocks to the N-methylpyrrolidone solution; Shake the solution system vigorously after left it to stand for 10 days and remove any precipitates in the system. Then centrifuge the resulting dispersion after wash it with 20mL of N-methylpyrrolidone. Remove the supernatant to obtain a dispersion of monolayer polymeric fullerene with a size greater than 5 µm. Figure 16 is an optical microscope image of the prepared monolayer two-dimensional polymeric fullerene deposited on the substrate.

### Embodiment 3-1

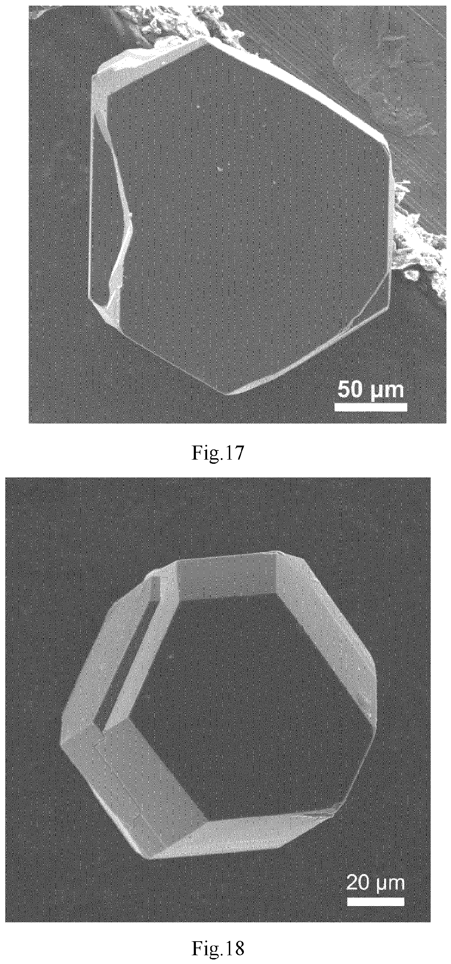

This embodiment adopts the same raw materials and steps as Embodiment 3 to prepare magnesium intercalated polymeric fullerene and two-dimensional polymeric fullerene dispersion, with the only difference being that in step S1, crystals grow at 300 °C region. Figure 17 is a scanning electron microscope image of the prepared magnesium intercalated polymeric fullerene blocks.

### Embodiment 3-2

This embodiment adopts the same raw materials and steps as Embodiment 3 to prepare magnesium intercalated polymeric fullerene and two-dimensional polymeric fullerene dispersion, with the only difference being that in step S1, sample grows crystals at 370 °C region. Figure 18 is a scanning electron microscope image of the prepared magnesium intercalated polymeric fullerene blocks.

### Embodiment 3-3

This embodiment adopts the same raw materials and steps as Embodiment 3 to prepare magnesium intercalated polymeric fullerene and two-dimensional polymeric fullerene dispersion, with the only difference being that in step S1, sample grows crystals at 450 °C region.

### Embodiment 3-4

This embodiment adopts the same raw materials and steps as Embodiment 3 to prepare two-dimensional polymeric fullerene dispersion, with the only difference being that in step S2, the magnesium intercalated polymeric fullerene solution system is left to stand for 10 days, which can also obtain a dispersion of polymeric fullerene with monolayer thickness.

### Embodiment 4

S1: Add 500mg of C₆₀ and 183 mg of magnesium powder (the molar ratio is 1:11) to a quartz tube in an argon glove box, and vacuum seal the quartz tube; Take the quartz tube out of the glove box and heat it in a dual temperature zone high-temperature reaction furnace for 2 days. The sample reacts at 630 °C region and grows crystals at 500 °C region; Take out the heated quartz tube and remove the sample from the quartz tube in the argon glove box to obtain quasi-hexagonal magnesium intercalated polymeric fullerene blocks.

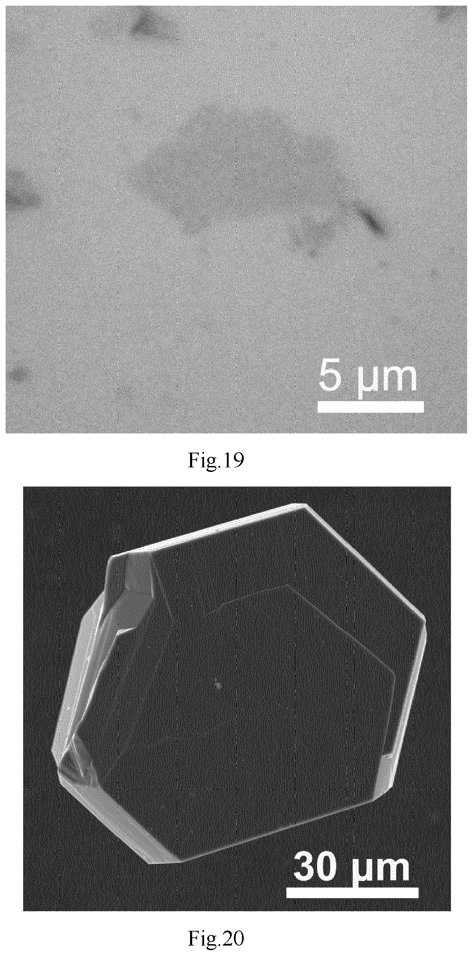

S2: Dissolve 0.2g of 8-hydroxyquinoline tetrabutylamine salt in 20mL of N-methylpyrrolidone to obtain a clear solution, and add 20mg of the magnesium intercalated polymeric fullerene blocks to the N-methylpyrrolidone solution; Shake the solution system vigorously after left it to stand for 7 days and remove any precipitates in the system. Then centrifuge the resulting dispersion after wash it with 20mL of N-methylpyrrolidone. Remove the supernatant to obtain a dispersion of polymeric fullerene with a size greater than 5 µm and monolayer thickness. Figure 19 is an optical microscope image of the prepared monolayer two-dimensional polymeric fullerene deposited on the substrate.

### Embodiment 4-1

This embodiment adopts the same raw materials and steps as Embodiment 4 to prepare magnesium intercalated polymeric fullerene and two-dimensional polymeric fullerene dispersion, with the only difference being that in step S1, it is heated in the dual temperature zone high-temperature reaction furnace for 0.5 hour. Figure 20 is a scanning electron microscope image of the prepared magnesium intercalated polymeric fullerene block.

### Embodiment 4-2

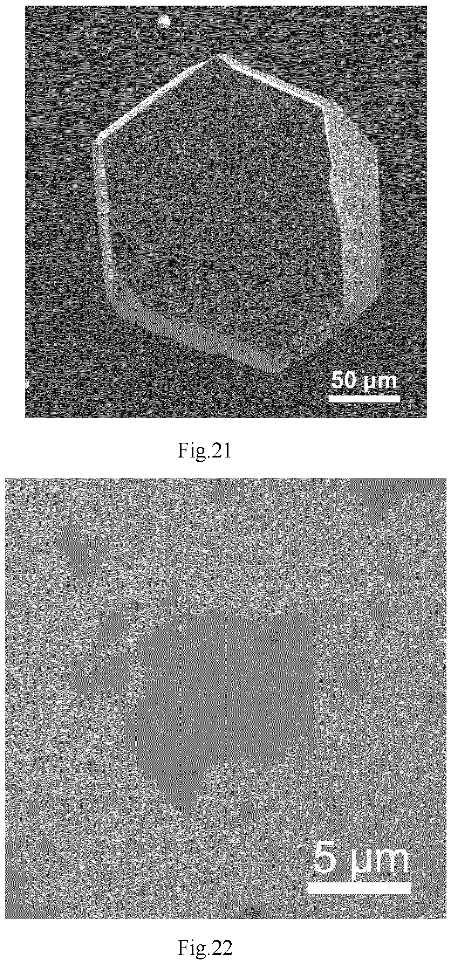

This embodiment adopts the same raw materials and steps as Embodiment 4 to prepare magnesium intercalated polymeric fullerene and two-dimensional polymeric fullerene dispersion, with the only difference being that in step S1, it is heated in the dual temperature zone high-temperature reaction furnace for 10 days. Figure 21 is a scanning electron microscope image of the prepared magnesium intercalated polymeric fullerene block.

### Embodiment 5

S1: Add 500mg of C₆₀ and 68 mg of lithium strip (the molar ratio is 1:14) into a quartz tube in an argon glove box, and vacuum seal the quartz tube; Take the quartz tube out of the glove box and heat it in a dual temperature zone high-temperature reaction furnace for 10 hours. The sample reacts at 600 °C region and grows crystals at 500 °C region; Take out the heated quartz tube and remove the sample from the quartz tube in the argon glove box, obtaining quasi-hexagonal lithium intercalated polymeric fullerene blocks.

S2: Dissolve 0.2g of tetrabutylammonium fluoride in 20mL of N-methylpyrrolidone to obtain a clear solution, and add 20mg of the lithium intercalated polymeric fullerene blocks to the N-methylpyrrolidone solution; Shake the solution system vigorously after left it to stand for 20 days and remove any precipitates in the system. Then centrifuge the resulting dispersion after wash it with 20mL of N-methylpyrrolidone. After removing the supernatant, a dispersion of monolayer polymeric fullerene with a size greater than 5 µm is obtained. Figure 22 is an optical microscope image of the prepared monolayer two-dimensional polymeric fullerene deposited on the substrate.

### Embodiment 5-1

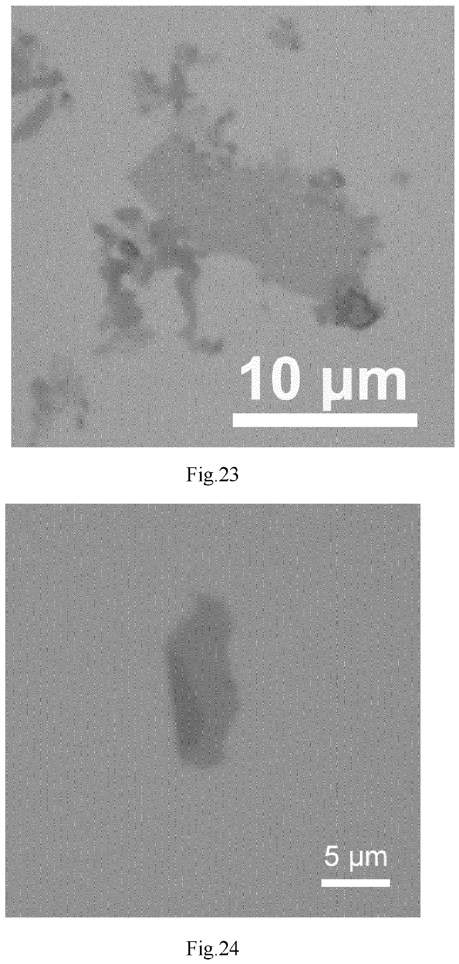

This embodiment adopts the same steps as Embodiment 5 to prepare metal intercalated polymeric fullerene and two-dimensional polymeric fullerene dispersion, with the only difference being that the metal used in step S1 is sodium (243 mg). Figure 23 is an optical microscope image of the prepared monolayer two-dimensional polymeric fullerene using metallic sodium intercalated polymeric fullerene.

### Embodiment 5-2

This embodiment adopts the same steps as Embodiment 5 to prepare metal intercalated polymeric fullerene blocks and two-dimensional polymeric fullerene dispersion, with the only difference being that the metal used in step S1 is potassium (379 mg). Figure 24 is an optical microscope image of the prepared two-dimensional polymeric fullerene with a thickness of about 5 nm using potassium intercalated polymeric fullerene.

### Embodiment 6

S1: Add 100mg C₇₀ and 30 mg magnesium powder into a quartz tube in an argon glove box, and vacuum seal the quartz tube; Take the quartz tube out of the glove box and heat it in a dual temperature zone high-temperature reaction furnace for 2 days. The sample reacts at 600 °C region and grows crystals at 500 °C region; Take out the heated quartz tube and remove the sample from the tube in an argon glove box, obtaining quasi-hexagonal magnesium intercalated polymeric fullerene blocks.

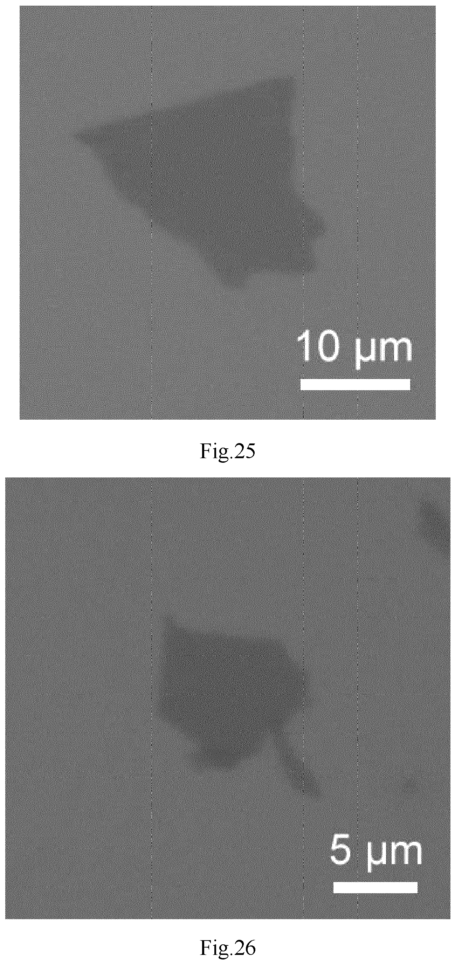

S2: Dissolve 0.2g of 8-hydroxyquinoline tetrabutylamine salt in 20mL of N-methylpyrrolidone to obtain a clear solution, and add 20mg of the magnesium intercalated polymeric fullerene blocks to the N-methylpyrrolidone solution; Shake the solution system vigorously after left it to stand for 30 days and remove any precipitates in the system. Then centrifuge the resulting dispersion after wash it with 20mL of N-methylpyrrolidone. Remove the supernatant to obtain a dispersion of two-dimensional polymeric fullerene with a size greater than 5 µm and thickness less than 5 nm. Figure 25 is an optical microscope image of the prepared two-dimensional polymeric fullerene deposited on the substrate.

### Embodiment 6-1

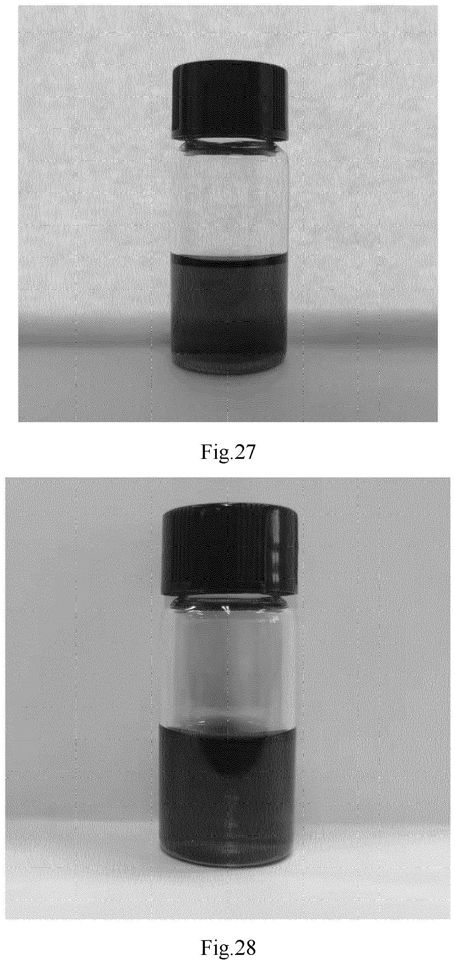

This embodiment adopts the same steps as Embodiment 6 to prepare metal intercalated polymeric fullerene and two-dimensional polymeric fullerene dispersion, with the only difference being that the fullerene used in step S1 is C₈₀ (115 mg). Figure 26 is an optical microscope image of the two-dimensional polymeric fullerene prepared by using C₈₀. Figure 27 is a photo of the two-dimensional polymeric fullerene dispersion prepared by using C₈₀.

### Embodiment 6-2

This embodiment adopts the same steps as Embodiment 6 to prepare metal intercalated polymeric fullerene and two-dimensional polymeric fullerene dispersion, with the only difference being that the fullerene used in step S1 is C₈₂ (117 mg). Figure 28 is a photo of the monolayer two-dimensional polymeric fullerene dispersion prepared by using C₈₂.

### Embodiment 7

S1: Add 500mg of C₆₀ and 250 mg of magnesium powder (the molar ratio is 1:15) into a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 520 °C region; Take out the heated quartz tube and remove the sample from the quartz tube in the argon glove box, obtaining quasi-hexagonal magnesium intercalated polymeric C₆₀ blocks.

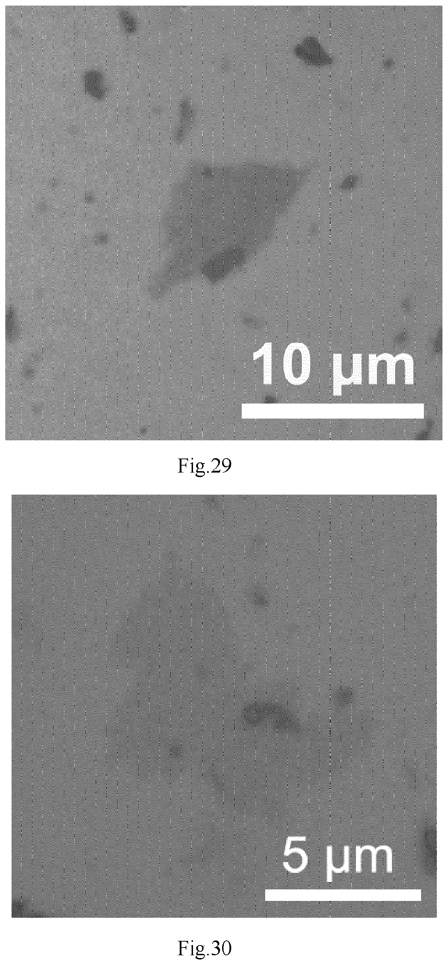

S2: Dissolve 0.2g of tetrabutylammonium fluoride in 20mL of N-methylpyrrolidone to obtain a clear solution, and add 20mg of the magnesium intercalated polymeric C₆₀ blocks to the N-methylpyrrolidone solution; Shake the solution system vigorously after left it to stand for 5 days and remove any precipitates in the system. Then centrifuge the dispersion after wash it with 20mL of N-methylpyrrolidone. After removing the supernatant, a dispersion of monolayer polymeric C₆₀ with a size greater than 5 µm is obtained. Figure 29 is an optical microscope image of the prepared monolayer two-dimensional polymeric fullerene deposited on the substrate.

### Embodiment 7-1

This embodiment adopts the same raw materials and steps as Embodiment 7 to prepare magnesium intercalated polymeric fullerene blocks and two-dimensional polymeric fullerene dispersion, with the only difference being that in step S2, the used quaternary ammonium salt is tetrabutylammonium chloride. Figure 30 is an optical microscope image of the two-dimensional polymeric fullerene prepared by using tetrabutylammonium chloride.

### Embodiment 7-2

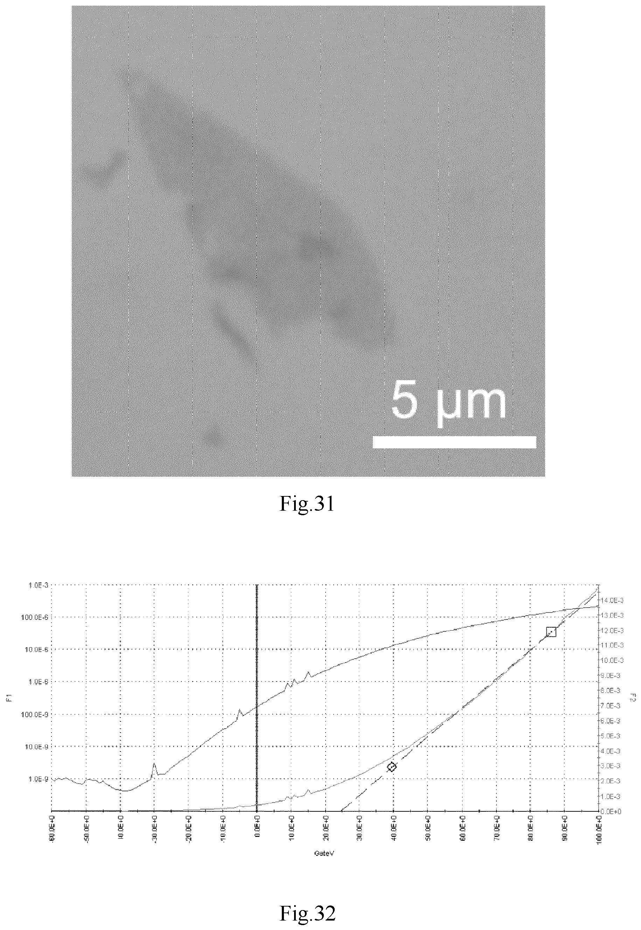

This embodiment adopts the same raw materials and steps as Embodiment 7 to prepare two-dimensional polymeric fullerene dispersion, with the only difference being that in step S2, the used quaternary ammonium salt is tetrabutylsalicylic acid ammonium. Figure 31 is an optical microscope image of the two-dimensional polymeric fullerene prepared by using tetrabutylsalicylic acid ammonium.

### Embodiment 7-3

This embodiment adopts the same raw materials and steps as Embodiment 7 to prepare two-dimensional polymeric fullerene dispersion, with the only difference being that in step S2, the used quaternary ammonium salt is tetrabutylammonium acetate.

### Embodiment 7-4

This embodiment adopts the same raw materials and steps as Embodiment 7 to prepare two-dimensional polymeric fullerene dispersion, with the only difference being that the dosage of quaternary ammonium salt used in step S2 is 0.25 g.

### Embodiment 7-5

This embodiment adopts the same raw materials and steps as Embodiment 7 to prepare two-dimensional polymeric fullerene dispersion, with the only difference being that the solvent of the quaternary ammonium salt solution in step S2 is ethanol. Wherein, the dispersion effect of the solvent was so poor that all samples precipitate, making it impossible to obtain a dispersion.

### Embodiment 7-6

This embodiment adopts the same raw materials and steps as Embodiment 7 to prepare two-dimensional polymeric fullerene dispersion, with the only difference being that the solvent of the quaternary ammonium salt solution in step S2 is acetonitrile.

### Embodiment 7-7

This embodiment adopts the same raw materials and steps as Embodiment 7 to prepare two-dimensional polymeric fullerene dispersion, with the only difference being that the solvent of the quaternary ammonium salt solution in step S2 is DMF.

### Embodiment 8

S1: Add 500mg of C₆₀ and 267mg of magnesium powder to a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 500 °C region; Take out the heated quartz tube and remove the sample from the quartz tube in the argon glove box, obtaining quasi-hexagonal magnesium intercalated polymeric C₆₀ blocks.

S2: Dissolve 20 mg of tetrabutylsalicylic acid ammonium in 20mL of N-methylpyrrolidone to obtain a clear solution, and add 20mg of the magnesium intercalated polymeric C₆₀ blocks to the N-methylpyrrolidone solution; Shake the solution system vigorously after left it to stand for 5 days; Centrifuge separation to obtain precipitates and dispersion separately, wash and dry the precipitates to obtain no-metal intercalated polymeric fullerene crystals. Then centrifuge the resulting dispersion after wash it with 20mL of N-methylpyrrolidone. After removing the supernatant, redisperse the sediment in NMP to obtain thin layered two-dimensional polymeric fullerene dispersion. The no-metal intercalated polymeric fullerene crystal has a similar crystal structure to that of the two-dimensional polymeric fullerene, that is, adjacent fullerene molecules are connected by covalent bonds, showing a regular topological structure of repeated arrangement, without metal intercalated.

### Embodiment 9

S1: Add 500mg of C₆₀ and 267mg of magnesium powder (the molar ratio is 1:16) to a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 500 °C region; Take out the heated quartz tube and remove the sample from the quartz tube in the argon glove box, obtaining quasi-hexagonal magnesium intercalated polymeric C₆₀ blocks. The cell parameters of the magnesium intercalated polymeric C₆₀ blocks are measured to be: a=17.57Å, b=9.17Å, c=16.00Å, α=90°, β=105.47°, γ=90°.

S2: Dissolve 0.2g of tetrabutylsalicylic acid ammonium in 20mL of N-methylpyrrolidone to obtain a clear solution, and add 20mg of the magnesium intercalated polymeric fullerene blocks to the N-methylpyrrolidone solution; Shake the solution system vigorously after left it to stand for 7 days and remove any precipitates in the system. Then centrifuge the resulting dispersion after wash it with 20mL of N-methylpyrrolidone. After removing the supernatant, a dispersion of monolayer polymeric fullerene with a size greater than 30 µm is obtained.

Bottom gate transistors based on the two-dimensional polymeric fullerene is constructed on Si/SiO₂ substrates. Deposit 50 nm thick gold by thermal evaporation on the two-dimensional polymeric fullerene surface covered with a mask, with evaporation conditions of 6 × 10⁻⁶ mbar, 0.3 Å/s. As the two-dimensional polymeric fullerene is an n-type semiconductor, the transistor devices are first placed in a glove box for 2 days, followed by semiconductor performance testing in the glove box. Shown typical n-type semiconductor transport characteristics (as shown in Figure 32), with a room temperature mobility of approximately 10 cm² V⁻¹ s⁻¹.

### Embodiment 10

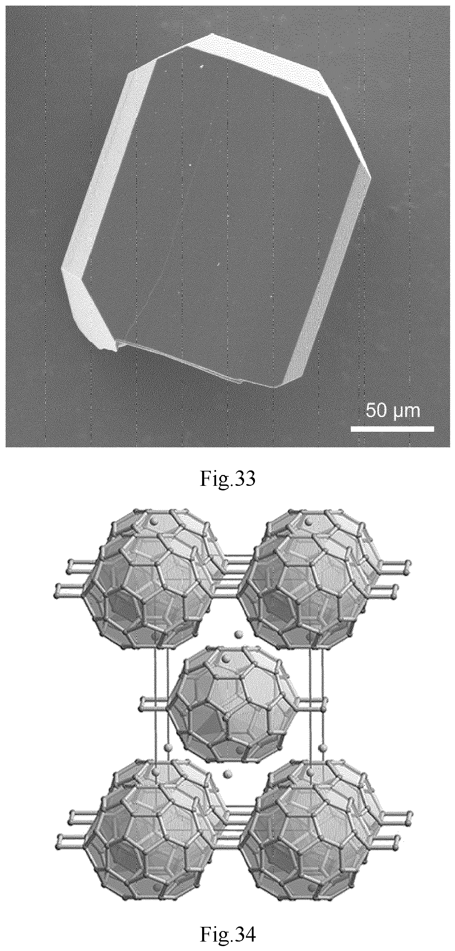

S1: Add 500 mg of C₆₀ and 150 mg of magnesium powder (the molar ratio is 1:9) to a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 500 °C region; Take out the heated quartz tube and remove the sample from the quartz tube in the argon glove box, obtaining quasi-tetragonal magnesium intercalated polymeric C₆₀ blocks, as shown in Figure 33; The magnesium intercalated polymeric C₆₀ crystal is then characterized by single crystal X-ray diffraction and its interlayer structure is obtained (Figure 34). The cell parameters of the magnesium intercalated polymeric C₆₀ block are measured to be: a=9.31 Å, b=9.03 Å, c=14.78 Å, α= 90°, β= 91.70°, γ= 90°.

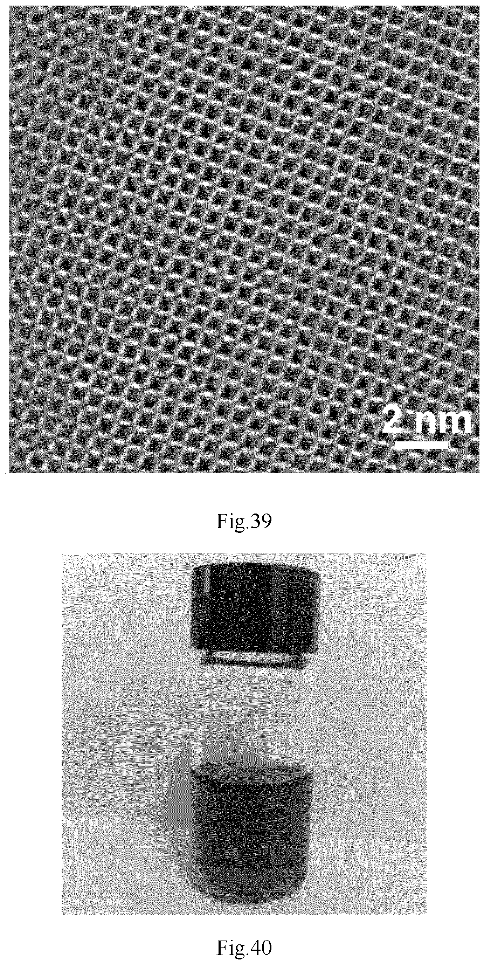

S2: Dissolve 0.2g of tetrabutylsalicylic acid ammonium in 20mL of N-methylpyrrolidone to obtain a clear solution, and add 20mg of the magnesium intercalated polymeric C₆₀ blocks to the N-methylpyrrolidone solution; Shake the solution system vigorously after left it to stand for 7 days and remove any precipitates in the system. Then centrifuge the resulting dispersion after wash it with 20mL of N-methylpyrrolidone. After removing the supernatant, redisperse the sediment in NMP to obtain a thin layered two-dimensional polymeric C₆₀ dispersion with size greater than 30 µ m and thickness less than 5 nm. After placing the obtained dispersion at room temperature for 7 days, its photo is shown in Figure 40. It can be see that there is no obvious precipitation in the dispersion, indicating that the dispersion system can exist stably.

By applying the aforementioned thin layer two-dimensional polymeric C₆₀ dispersion droplets onto a Si/SiO₂ substrate and allowing the solvent to evaporate, a thin layer of polymeric C₆₀ flake deposited on the surface of the substrate is obtained. Heating the thin layered polymeric C₆₀ at 600K for 10 minutes showed almost no change in its Raman spectra, proving the good thermal stability of the thin layered polymeric C₆₀. The two-dimensional polymeric C₆₀ is characterized by high-resolution scanning transmission electron microscopy, and the result is shown in Figure 39. It can be seen that the fullerene layer still exhibits a regular topological structure of carbon clusters arranged repeatedly on the plane.

### Embodiment 11

S1: Add 500 mg of C₆₀ and 44 mg of lithium strip into a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 500 °C region; Take out the heated quartz tube and remove the sample from the quartz tube in the argon glove box, obtaining lithium intercalated polymeric C₆₀ blocks. Single crystal X-ray diffraction shows that their crystal cell structure is tetragonal.

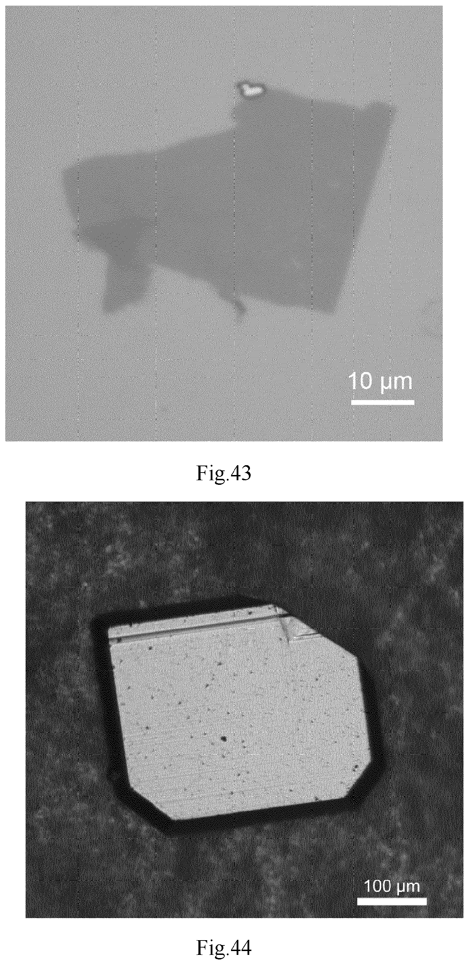

S2: Dissolve 0.2g of tetrabutylsalicylic acid ammonium in 20mL of N-methylpyrrolidone to obtain a clear solution, and add 20mg of the lithium intercalated polymeric C₆₀ blocks to the N-methylpyrrolidone solution; Shake the solution system vigorously after left it to stand for 7 days and remove any precipitates in the system. Then centrifuge the resulting dispersion after wash it with 20mL of N-methylpyrrolidone. After removing the supernatant, redisperse the sediment in NMP to obtain a thin layered two-dimensional polymeric C₆₀ dispersion with size greater than 15 µ m and thickness less than 5 nm. Figure 43 is an optical microscope image of the obtained two-dimensional polymeric C₆₀ deposited on the substrate.

### Embodiment 11-1

This embodiment adopts the same steps as Embodiment 11 to prepare metal intercalated polymeric fullerene blocks and two-dimensional polymeric C₆₀ dispersion, with the only difference being that the metal used in Step S1 is sodium (156mg). Figure 44 is an optical microscope image of the prepared sodium intercalated polymeric C₆₀ block.

### Embodiment 11-2

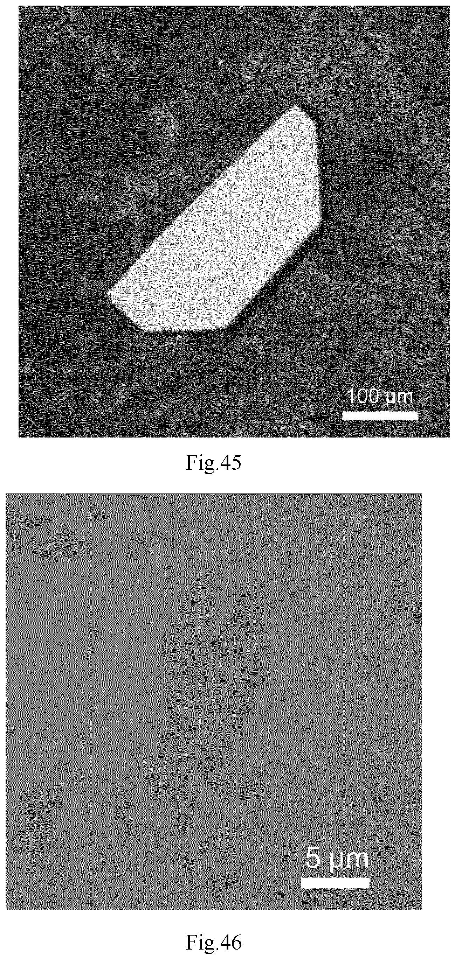

This embodiment adopts the same steps as Embodiment 11 to prepare metal intercalated polymeric fullerene blocks and two-dimensional polymeric C₆₀ dispersion, with the only difference being that the metal used in Step S1 is potassium (244mg). Figure 45 is an optical microscope image of the prepared potassium intercalated polymeric C₆₀ block.

### Embodiment 11-3

This embodiment adopts the same steps as Embodiment 11 to prepare two-dimensional polymeric C₆₀ dispersion, with the only difference being that the solution system of lithium intercalated polymeric C₆₀ in step S2 is left to stand for 1 day before subjected to subsequent treatment, ultimately obtaining a thin layered two-dimensional polymeric C₆₀ dispersion.

### Embodiment 11-4

This embodiment adopts the same steps as Embodiment 11 to prepare two-dimensional polymeric C₆₀ dispersion, with the only difference being that the solution system of lithium intercalated polymeric C₆₀ in step S2 is left to stand for 3 days before subjected to subsequent treatment, which also obtains a thin layered two-dimensional polymeric C₆₀ dispersion.

### Embodiment 12

S1: Add 200 mg C₇₀ and 51 mg magnesium powder into a quartz tube in an argon glove box, and vacuum seal the quartz tube; Take the quartz tube out of the glove box and heat it in a dual temperature zone high-temperature reaction furnace for 2 days. The sample reacts at 600 °C region and grows crystals at 500 °C region; Take out the heated quartz tube and remove the sample from the tube in an argon glove box, obtaining quasi-tetragonal magnesium intercalated polymeric C₇₀ blocks.

S2: Dissolve 0.2g of 8-hydroxyquinoline tetrabutylamine salt in 20mL of N-methylpyrrolidone to obtain a clear solution, and add 20mg of the magnesium intercalated polymeric C₇₀ blocks to the N-methylpyrrolidone solution; Shake the solution system vigorously after left it to stand for 5 days and remove any precipitates in the system. Then centrifuge the resulting dispersion after wash it with 20mL of N-methylpyrrolidone. After removing the supernatant, a dispersion of thin layered two-dimensional polymeric fullerene is obtained with a thickness less than 5 nm.

### Embodiment 12-1

This embodiment adopts the same steps as Embodiment 12 to prepare magnesium intercalated polymeric fullerene and two-dimensional polymeric fullerene dispersion, with the only difference being that the fullerene used in Step S1 is C₈₀ (230 mg).

### Embodiment 12-2

This embodiment adopts the same steps as Embodiment 12 to prepare magnesium intercalated polymeric fullerene and two-dimensional polymeric fullerene dispersion, with the only difference being that the fullerene used in Step S1 is C₈₂ (234 mg).

### Embodiment 12-3

This embodiment adopts the same steps as Embodiment 12 to prepare two-dimensional polymeric fullerene dispersion, with the only difference being that the solution system of magnesium intercalated polymeric fullerene in step S2 is left to stand for 10 days before subjected to subsequent treatment, ultimately obtaining a thin layered two-dimensional polymeric fullerene dispersion with a thickness of 1-3 nm.

### Embodiment 13

S1: Add 500 mg of C₆₀ and 150 mg of magnesium powder to a quartz tube in an argon glove box, and vacuum seal the quartz tube; Take the quartz tube out of the glove box and heat it in a dual temperature zone high-temperature reaction furnace for 20 hours. The sample reacts at 580 °C region and grows crystals at 500 °C region; Take out the heated quartz tube and remove the sample from the quartz tube in the argon glove box, obtaining quasi-tetragonal magnesium intercalated polymeric C₆₀ blocks.

S2: Dissolve 0.3g of tetrabutylsalicylic acid ammonium in 20mL of N-methylpyrrolidone to obtain a clear solution, and add 25mg of the magnesium intercalated polymeric C₆₀ blocks to N-methylpyrrolidone solution; Shake the solution system vigorously after left it to stand for 5 days and remove any precipitates in the system. Then centrifuge the resulting dispersion after wash it with 20mL of N-methylpyrrolidone. After removing the supernatant, redisperse it in NMP to obtain a thin layered two-dimensional polymeric C₆₀ dispersion with lateral size greater than 15 µm and thickness less than 5 nm. Figure 46 is an optical microscope image of the two-dimensional polymeric C₆₀ deposited on the substrate.

### Embodiment 13-1

This embodiment uses the same raw materials and steps as Embodiment 13 to prepare two-dimensional polymeric C₆₀ dispersion, with the only difference being that the quaternary ammonium salt used in Step S2 is tetrabutylammonium chloride. The prepared products are only small-sized thick layer blocks, and cannot obtain thin layer samples.

### Embodiment 13-2

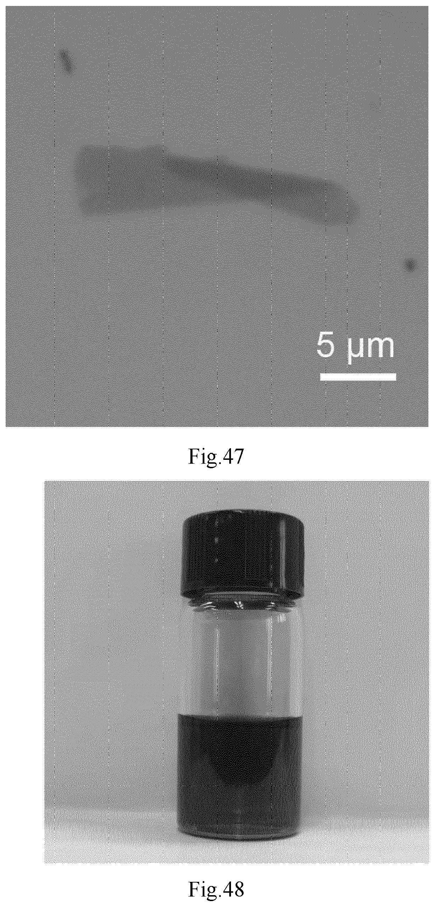

This embodiment uses the same raw materials and steps as Embodiment 13 to prepare a two-dimensional polymeric C₆₀ dispersion, with the only difference being that the quaternary ammonium salt used in Step S2 is tetrabutylammonium bromide. As shown in Figure 47, the prepared products are large-sized thin layer samples.

### Embodiment 13-3

This embodiment uses the same raw materials and steps as Embodiment 13 to prepare two-dimensional polymeric C₆₀ dispersion, with the only difference being that the quaternary ammonium salt used in Step S2 is tetrabutylammonium fluoride, with a dosage of 0.5g. The prepared two-dimensional polymeric C₆₀ NMP dispersion is shown in Figure 48.

### Embodiment 13-4

This embodiment uses the same raw materials and steps as Embodiment 13 to prepare two-dimensional polymeric C₆₀ dispersion, with the only difference being that the solution system of magnesium intercalated polymeric C₆₀ in step S2 is left to stand for 20 days before subjected to subsequent treatment, ultimately obtaining a dispersion of thin layered two-dimensional polymeric C₆₀ with a thickness of 1-3 nm.

### Embodiment 14

S1: Add 500 mg of C₆₀ and 150 mg of magnesium powder to a quartz tube in an argon glove box, and vacuum seal the quartz tube; Take the quartz tube out of the glove box and heat it in a dual temperature zone high-temperature reaction furnace for 24 hours. The sample reacts at 600 °C region and grows crystals at 520 °C region; Take out the heated quartz tube and remove the sample from the quartz tube in the argon glove box, obtaining quasi-tetragonal magnesium intercalated polymeric C₆₀ blocks.

S2: Dissolve 0.2g of 8-hydroxyquinoline tetrabutylamine salt in 20mL of acetonitrile to obtain a clear solution, and add 20mg of the magnesium intercalated polymeric C₆₀ blocks to the acetonitrile solution; shake the solution system vigorously after left it to stand for 5 days and remove any precipitates in the system. Then centrifuge the resulting dispersion after wash it with 20mL of acetonitrile. After removing the supernatant, redisperse the sediment in acetonitrile to obtain a dispersion of a thin layered two-dimensional polymeric C₆₀ with size greater than 5 µ m and thickness less than 5 nm.

### Embodiment 14-1

This embodiment uses the same raw materials and steps as Embodiment 14 to prepare two-dimensional polymeric C₆₀ dispersion, with the only difference being that the solution system of magnesium intercalated polymeric C₆₀ in step S2 is left to stand for 30 days before subjected to subsequent treatment, ultimately obtaining a dispersion of thin layered two-dimensional polymeric C₆₀ with a thickness of about 2 nm.

### Embodiment 15

S1: Add 500 mg of C₆₀ and 150 mg of magnesium powder to a quartz tube in an argon glove box, and vacuum seal the quartz tube; take the quartz tube out of the glove box and heat it in a dual temperature zone high-temperature reaction furnace for 24 hours. The sample reacts at 600 °C region and grows crystals at 500 °C region; take out the heated quartz tube and remove the sample from the quartz tube in the argon glove box, obtaining quasi-tetragonal magnesium intercalated polymeric C₆₀ blocks.

S2: Dissolve 20mg of tetrabutylsalicylic acid ammonium in 20mL of N-methylpyrrolidone to obtain a clear solution, and add 20mg of the magnesium intercalated polymeric C₆₀ blocks to the N-methylpyrrolidone solution; Shake the solution system vigorously after left it to stand for 5 days; Centrifuge separation the above solution system to obtain precipitates and dispersion separately, wash and dry the precipitates to obtain polymeric C₆₀ crystals without metal intercalated. Then centrifuge the resulting dispersion after wash it with 20mL of N-methylpyrrolidone. After removing the supernatant, redisperse it in NMP to obtain a dispersion of thin layered two-dimensional polymeric C₆₀. The obtained polymeric C₆₀ crystal has a similar crystal structure to that of the two-dimensional polymeric C₆₀, that is, adjacent C₆₀ molecules are connected by covalent bonds, showing a regular topological structure of repeated arrangement, without metal intercalated.

In the preparation method of quasi-hexagonal magnesium intercalated polymeric fullerene blocks in an embodiment of the present application, the molar ratio of fullerene to magnesium powder is 1:2 to 1:21, while the molar rations used in comparative embodiments 1 and 2 are 1:1 and 1:25, respectively, and no hexagonal crystals are generated, indicating that the molar ratio of raw fullerene to magnesium powder would affect the preparation of polymeric fullerene blocks.

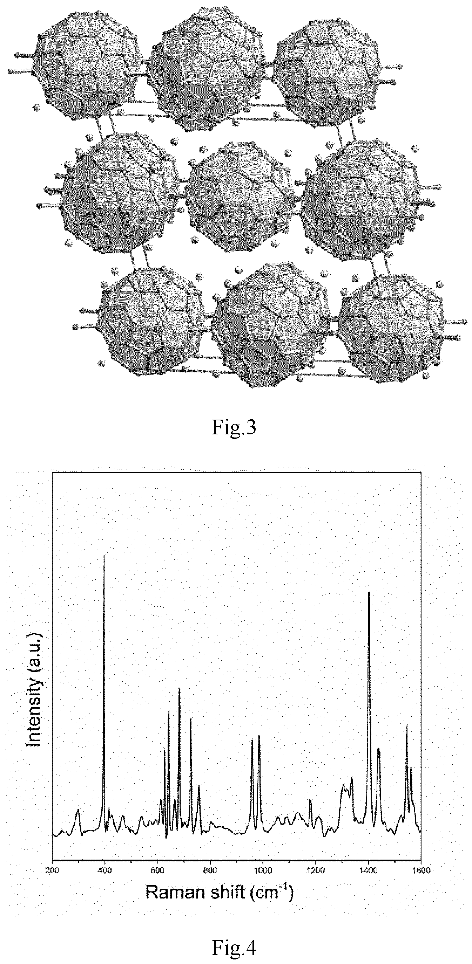

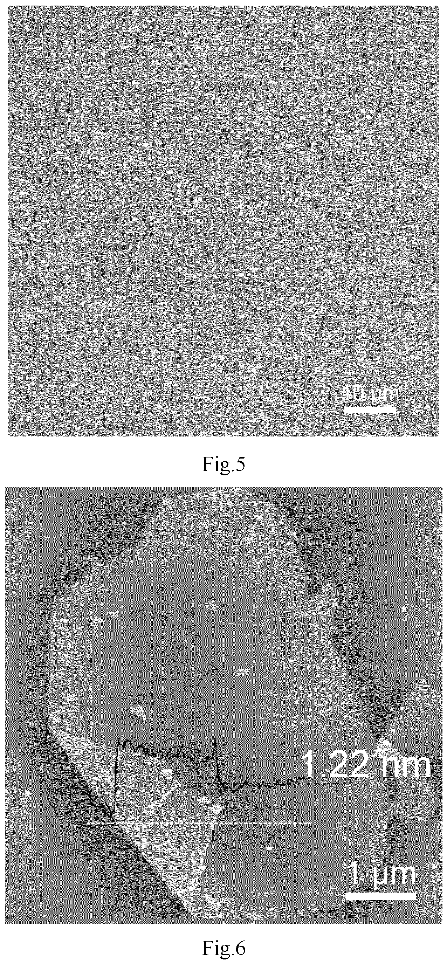

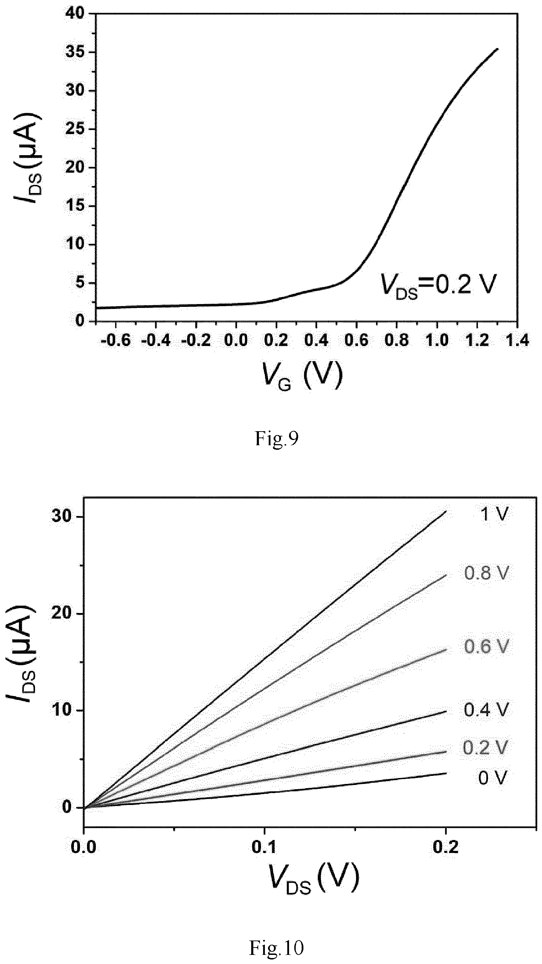

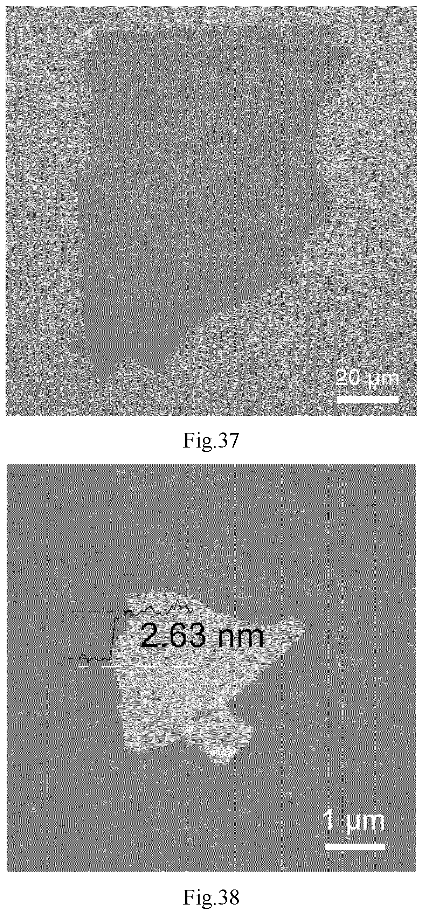

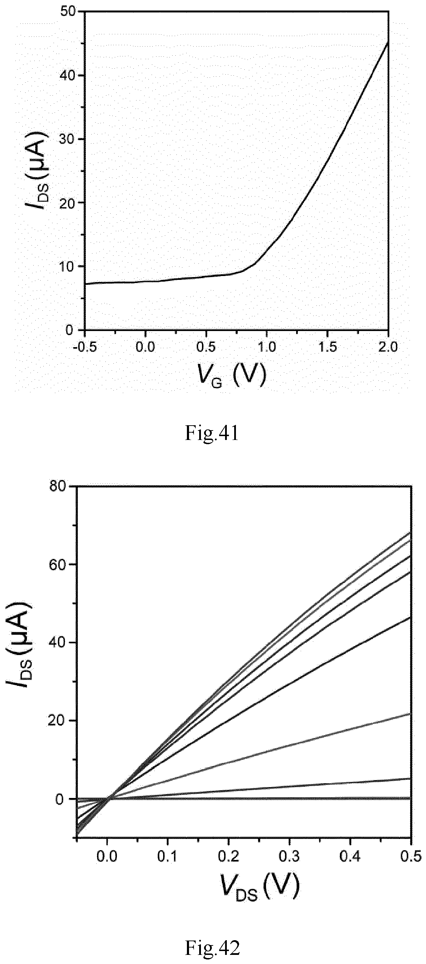

Perform relevant tests on the magnesium intercalated polymeric fullerene blocks and the two-dimensional polymeric fullerene prepared in the embodiments and comparative embodiments, and the specific results are shown in Figures 1 to 48. Wherein, Figure 1 is a scanning electron microscope image of the polymeric fullerene block prepared in step S1 of Embodiment 1, from which it can be seen that the block has high crystallinity and a lateral size of greater than 200 µm; Figures 2 and 3 are schematic diagrams of a single crystal structure and a interlayer structure of the polymeric fullerene block prepared in step S1 of Embodiment 1. Figures 2 and 3 are obtained from single crystal XRD data; Figure 4 shows the Raman spectrum of the polymeric fullerene block prepared in step S1 of Embodiment 1, from which it can be seen that the typical [2+2] cycloaddition bond peak in the polymeric fullerene and the A_{g} (2) vibration mode peak of the fullerene itself; Figure 5 is an optical microscope image of the two-dimensional polymeric fullerene prepared in Embodiment 1, where it can be seen that the lateral size of the crystal is over 30 µm; If the size of two-dimensional polymeric fullerene sheets is greater than 10 microns, lower cost lithography techniques can be used in the preparation of semiconductor devices, which is beneficial for their application; Figure 6 is the atomic force microscope image of the two-dimensional polymeric fullerene prepared in Embodiment 1, from which it can be seen that the thickness of the two-dimensional polymeric fullerene is 1.22nm, indicating that it is a monolayer structure; Figure 7 is the scanning transmission electron microscope image of the two-dimensional polymeric fullerene prepared in Embodiment 1, and it can be seen that the two-dimensional polymeric fullerene is a monoclinic crystal with quasi-hexagonal lattice structure; Figure 9 shows the transfer characteristic curve of two-dimensional polymeric fullerene prepared in Embodiment 1; Figure 10 shows the output curve of the two-dimensional polymeric fullerene prepared in Embodiment 1, from which it can be seen that its mobility is 5cm²V⁻¹s⁻¹, and the on-off ratio is 20, which has the application prospects as transistor devices. Figure 33 is a scanning electron microscope image of the polymeric fullerene block prepared in step S1 of Embodiment 10, from which it can be seen that the block has high crystallinity and a lateral size of greater than 200 µm; Figures 34 and 35 are schematic diagrams of a single crystal structure and a interlayer structure of the polymeric fullerene block prepared in step S1 of Embodiment 10. Figures 34 and 35 are obtained from single crystal XRD data; Figure 36 shows the Raman spectrum of the polymeric fullerene block prepared in step S1 of Embodiment 10, from which it can be seen that the polymeric fullerene block has high crystallinity; Figure 37 is an optical microscope image of the two-dimensional polymeric fullerene prepared in Embodiment 10, where it can be seen that the lateral size of the crystal is over 30 µm; Figure 38 is the atomic force microscope diagram of the two-dimensional polymeric fullerene prepared in Embodiment 10, from which it can be seen that the thickness of the two-dimensional polymeric fullerene is 2.63nm, indicating that it is a thin layer structure less than 5 nm; Figure 39 is the scanning transmission electron microscope picture of the two-dimensional polymeric fullerene prepared in Embodiment 10, and it can be seen that the two-dimensional polymeric fullerene is a monoclinic crystal with a quasi-tetragonal lattice structure; Figure 41 shows the transfer characteristic curve of two-dimensional polymeric fullerene prepared in Embodiment 10; Figure 42 shows the output curve of the two-dimensional polymeric fullerene prepared in Embodiment 10, from which it can be seen that the sample has field-effect transistor performance.

## Claims

1. A metal intercalated polymeric fullerene,
**characterized in that** it has a quasi-hexagonal crystal cell structure, wherein the metal is magnesium, lithium, potassium, or sodium;
wherein, the quasi-hexagonal structure includes a central fullerene and six side fullerenes which surround the central fullerene and are arranged in a hexagonal shape, and bond with the central fullerene respectively;
wherein, the central fullerene is connected to four of the side fullerenes through one C-C single bond respectively, and to two of the side fullerenes through two C-C single bonds respectively;
wherein, the six side fullerenes include a first side fullerene, a second side fullerene, a third side fullerene, a fourth side fullerene, a fifth side fullerene, and a sixth side fullerene; the central fullerene is connected to each of the first side fullerene, the second side fullerene, the fourth side fullerene, and the fifth side fullerene through one C-C single bond respectively; the central fullerene is connected to each of the third side fullerene and the sixth side fullerene through two C-C single bonds respectively, and the four carbon atoms in the two C-C single bonds form a quaternary ring structure.

2. The metal intercalated polymeric fullerene according to claim 1, wherein, the cell parameters of the crystal cell structure are: a=17.57Å, b=9.171Å, c=16.00Å, α=90°, β=105.47°, γ=90°.

3. The metal intercalated polymeric fullerene according to claim 1 or 2, wherein, the fullerene is C₆₀.

4. The metal intercalated polymeric fullerene according to any one of claims 1-3, wherein, in the metal intercalated polymeric fullerene, adjacent fullerene molecules are connected with each other through covalent bond, showing a regular topological structure of repeated arrangement.

5. A preparation method of metal intercalated polymeric fullerene of any one of claims 1-4 **characterized in that** reacting fullerene with metal to obtain metal intercalated polymeric fullerene; wherein, the molar ratio of the fullerene to the metal is 1:2 to 1:21; the reaction temperature of the fullerene and the metal is 300°C to 750 °C, and the metal is magnesium, lithium, potassium, or sodium.

6. A two-dimensional polymeric fullerene, **characterized in that** fullerene molecule, a cluster cage molecule, is the basic unit, and adjacent fullerene molecules are connected to each other through covalent bond to form a regular and orderly network structure, in which no metal ions are intercalated;
wherein the two-dimensional polymeric fullerene has a thin layer structure with a thickness less than 5 nm;
wherein, the cell of the crystal structure of the two-dimensional polymeric fullerene comprises quasi-hexagonal structure, wherein the quasi-hexagonal structure includes a central fullerene and six side fullerenes which surround the central fullerene and are arranged in a hexagonal shape;
wherein, the six side fullerenes include a first side fullerene, a second side fullerene, a third side fullerene, a fourth side fullerene, a fifth side fullerene, and a sixth side fullerene; the central fullerene is connected to each of the first side fullerene, the second side fullerene, the fourth side fullerene, and the fifth side fullerene through one C-C single bond respectively; the central fullerene is connected to each of the third side fullerene and the sixth side fullerene through two C-C single bonds respectively, and the four carbon atoms in the two C-C single bonds form a quaternary ring structure; or
wherein, the cell of the two-dimensional polymeric fullerene has a quasi-tetragonal structure;
wherein, in the cell of the quasi-tetragonal structure of the two-dimensional polymeric fullerene, there are 8 fullerene clusters arranged around each central fullerene cluster, wherein 8 fullerene clusters are arranged in a cuboid shape, and each fullerene cluster is located at a vertex of the cuboid;
wherein, each fullerene cluster is connected with four fullerene clusters, and is connected with two of the fullerene clusters through one C-C single bond respectively, while is connected with the other two of the fullerene clusters through two C-C single bonds respectively, and the four carbon atoms in the two C-C single bonds form a quaternary ring structure.

7. The two-dimensional polymeric fullerene according to claim 6, wherein the two-dimensional polymeric fullerene has stable chemical properties and will not decompose under ambient pressure.

8. A preparation method for two-dimensional polymeric fullerene, **characterized in that** the preparation method is for preparing the two-dimensional polymeric fullerene of claim 6 or 7, comprising the following steps:
providing metal intercalated polymeric fullerenes; and
replacing metal ions in the metal intercalated polymeric fullerene with quaternary ammonium salts.

9. The preparation method according to claim 8, wherein the metal intercalated polymeric fullerene is the metal intercalated polymeric fullerene according to any one of claims 1-4.

10. The preparation method according to claim 8, wherein the structural formula of the quaternary ammonium salts is as follows: 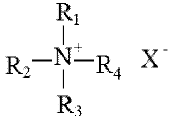 wherein R₁, R₂, R₃ and R₄ are independently selected from alkyl groups containing 1-8 carbon atoms, with X⁻ being salicylate ions, fluoride ions, bromine ions, or 8-hydroxyquinoline anions or other anions with coordination ability with metal ions.

11. An application of the metal intercalated polymeric fullerene according to any one of claims 1-4 and the two-dimensional polymeric fullerene according to claim 6 or 7 in superconducting materials, field effect transistors, electronics, catalysis, or energy storage fields.

## Patentansprüche

1. Ein metallinterkaliertes polymeres Fulleren, das sich durch eine quasi-hexagonale Kristallzellenstruktur auszeichnet, wobei das Metall Magnesium, Lithium, Kalium oder Natrium ist;
wobei die quasi-hexagonale Struktur ein zentrales Fulleren und sechs seitliche Fullerene umfasst, die das zentrale Fulleren umgeben und in einer hexagonalen Form angeordnet sind und sich jeweils mit dem zentralen Fulleren verbinden;
das zentrale Fulleren jeweils durch eine C-C-Einfachbindung mit vier der Seitenfullerene und jeweils durch zwei C-C-Einfachbindungen mit zwei der Seitenfullerene verbunden ist;
wobei die sechs Seitenfullerene ein erstes Seitenfulleren, ein zweites Seitenfulleren, ein drittes Seitenfulleren, ein viertes Seitenfulleren, ein fünftes Seitenfulleren und ein sechstes Seitenfulleren umfassen; das zentrale Fulleren jeweils durch eine C-C-Einfachbindung mit dem ersten Seitenfulleren, dem zweiten Seitenfulleren, dem vierten Seitenfulleren und dem fünften Seitenfulleren verbunden ist; das zentrale Fulleren jeweils durch zwei C-C-Einfachbindungen mit dem dritten Seitenfulleren und dem sechsten Seitenfulleren verbunden ist und die vier Kohlenstoffatome in den beiden C-C-Einfachbindungen eine quaternäre Ringstruktur bilden.

2. Das metallinterkalierte polymere Fulleren gemäß Ansprüche 1, wobei die Zellparameter der Kristallzellstruktur lauten: a = 17,57 Å, b = 9,17 Å, c = 16,00 Å, α = 90°, β = 105,47°, γ = 90°.

3. Das metallinterkalierte polymere Fulleren gemäß Ansprüche 1 oder 2, wobei das Fulleren C60 ist.

4. Das metallinterkalierte polymere Fulleren gemäß einem der Ansprüche 1 bis 3, wobei in dem metallinterkaliertes polymeres Fulleren benachbarte Fullerenmoleküle durch kovalente Bindungen miteinander verbunden sind und eine regelmäßige topologische Struktur mit wiederholter Anordnung aufweisen.

5. Ein Verfahren zur Herstellung vom metallinterkalierten polymeren Fulleren nach einem der Ansprüche 1 bis 4, **dadurch gekennzeichnet, dass** Fulleren mit Metall reagiert, um metallinterkaliertes polymeres Fulleren zu erhalten; wobei das molare Verhältnis des Fullerens zum Metall 1:2 bis 1:21 beträgt; das Reaktionstemperatur des Fullerens und des Metalls 300 °C bis 750 °C beträgt und das Metall Magnesium, Lithium, Kalium oder Natrium ist.

6. Ein zweidimensionales polymeres Fulleren, bei dem das Fulleren-Cluster-Käfigmolekül die Grundbaueinheit ist, und die benachbarten Fulleren-Cluster-Käfigmoleküle durch kovalente Bindungen miteinander verbunden sind, um eine regelmäßige und geordnete Netzwerkstruktur zu bilden, in der keine Metallionen dotiert sind;
das zweidimensionale polymere Fulleren eine Dünnschichtstruktur mit einer Dicke von weniger als 5 nm aufweist;
die Zelle der Kristallstruktur des zweidimensionalen polymeren Fullerens eine quasi-hexagonale Struktur umfasst, wobei die quasi-hexagonale Struktur ein zentrales Fulleren und sechs seitliche Fullerene umfasst, die das zentrale Fulleren umgeben und in einer hexagonalen Form angeordnet sind;
wobei die sechs Seitenfullerene ein erstes Seitenfulleren, ein zweites Seitenfulleren, ein drittes Seitenfulleren, ein viertes Seitenfulleren, ein fünftes Seitenfulleren und ein sechstes Seitenfulleren umfassen; das zentrale Fulleren jeweils durch eine C-C-Einfachbindung mit dem ersten Seitenfulleren, dem zweiten Seitenfulleren, dem vierten Seitenfulleren und dem fünften Seitenfulleren verbunden ist; das zentrale Fulleren jeweils durch zwei C-C-Einfachbindungen mit dem dritten Seitenfulleren und dem sechsten Seitenfulleren verbunden ist und die vier Kohlenstoffatome in den beiden C-C-Einfachbindungen eine quaternäre Ringstruktur bilden;
oder die Zelle des zweidimensionalen polymeren Fullerens eine quasi-tetragonale Struktur aufweist;
wobei in der Zelle der Kristallstruktur des zweidimensionalen polymeren Fullerens 8 Fullerencluster um jeden zentralen Fullerencluster angeordnet sind, wobei die 8 Fullerencluster in einer Quaderform angeordnet sind und sich jeder Fullerencluster an einer Spitze des Quaders befindet; wobei jeder Fullerencluster mit vier Fullerenclustern verbunden ist und jeweils durch eine C-C-Einfachbindung mit zwei der Fullerencluster verbunden ist, während er jeweils durch zwei C-C-Einfachbindungen mit den anderen beiden Fullerenclustern verbunden ist, und die vier Kohlenstoffatome in den beiden C-C-Einfachbindungen eine quaternäre Ringstruktur bilden.

7. Das zweidimensionale polymere Fulleren gemäß Ansprüche 6, wobei das zweidimensionale polymere Fulleren stabile chemische Eigenschaften aufweist und sich unter Umgebungsdruck nicht zersetzt.

8. Ein Herstellungsverfahren für zweidimensionales polymeres Fulleren, **dadurch gekennzeichnet, dass** das Herstellungsverfahren zur Herstellung des zweidimensionalen polymeren Fullerens nach einem der Ansprüche 6 oder 7 dient und die folgenden Schritte umfasst:
Bereitstellung des metallinterkalierten polymeren Fullerens; und
Ersetzen von Metallionen im metallinterkalierten polymeren Fulleren durch quartäre Ammoniumsalze.

9. Das Herstellungsverfahren gemäß Anspruch 8, wobei das metallinterkalierte polymere Fulleren das metallinterkalierte polymere Fulleren gemäß einem der Ansprüche 1 bis 4 ist.

10. Das Herstellungsverfahren gemäß Anspruch 8, wobei die Strukturformel der quartären Ammoniumsalze wie folgt ist: 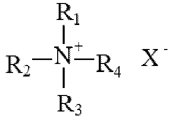 wobei R1, R2, R3 und R4 unabhängig voneinander aus Alkylgruppen mit 1-8 Kohlenstoffatomen ausgewählt sind, wobei X' Salicylat-Ionen, Fluorid-Ionen, BromIonen oder 8-Hydroxychinolin-Anionen oder andere Anionen mit Koordinationsfähigkeit mit Metallionen sind, das Metall Magnesium, Lithium, Kalium oder Natrium ist.

11. Eine Anwendung des metallinterkalierten polymeren Fullerens gemäß einem der Ansprüche 1 bis 4 und des zweidimensionalen polymeren Fullerens gemäß Ansprüche 6 oder 7 in den Bereichen der supraleitenden Materialien, der Feldeffekttransistoren, der Elektronik, der Katalyse oder der Energiespeicherung.

## Revendications

1. Fullerène polymère intercalé de métal, **caractérisé en ce qu'**il présente une structure cellulaire cristalline hexagonale, dans lequel le métal est le magnésium, le lithium, le potassium ou le sodium;
dans lequel la structure hexagonale comprend un fullerène central et six fullerènes latéraux, les fullerènes latéraux entourent le fullerène central, sont disposés en forme hexagonale, et se lient chacun au fullerène central respectivement,
dans lequel le fullerène central est relié à quatre des fullerènes latéraux par une liaison simple C-C respectivement, et à deux des fullerènes latéraux par deux liaisons simples C-C respectivement,
dans lequel les six fullerènes latéraux comprennent un premier fullerène latéral, un deuxième fullerène latéral, un troisième fullerène latéral, un quatrième fullerène latéral, un cinquième fullerène latéral et un sixième fullerène latéral, ledit fullerène central est relié à chacun ledit premier fullerène latéral, deuxième fullerène latéral, quatrième fullerène latéral et cinquième fullerène latéral par une liaison simple C-C respectivement, ledit fullerène central est relié à chacun ledit troisième fullerène latéral et sixième fullerène latéral par deux liaisons simples C-C respectivement, et les quatre atomes de carbone dans les deux liaisons simples C-C forment une structure annulaire à quatre membres.

2. Fullerène polymère intercalé de métal selon la revendication 1, dans lequel les paramètres cellulaires de la structure cellulaire cristalline sont: a=17.57Å, b=9.16Â, c=16.00Å, α=90°, β=105.47°, γ=90°.

3. Fullerène polymère intercalé de métal selon la revendication 1 ou 2, dans lequel ledit fullerène est C₆₀.

4. Fullerène polymère intercalé de métal selon l'une des revendications 1 à 3, dans lequel, dans ledit fullerène polymère intercalé de métaux, les molécules de fullerène adjacentes sont reliées les unes aux autres par des liaisons covalentes, présentant une structure topologique régulière d'arrangement répété.

5. Procédé de préparation de fullerène polymère intercalé de métal selon l'une des revendications 1 à 4, comprenant : la réaction du métal avec du fullerè ne pour obtenir dudit fullerène polymère intercalé de métal ; dans lequel le rapport molaire dudit fullerène audit métal est compris entre 1:2 et 1:21, et la température de réaction dudit fullerène avec ledit métal est comprise entre 300 et 750°C, et ledit métal est le magnésium, le lithium, le potassium ou le sodium.

6. Fullerène polymère bidimensionnel, **caractérisé en ce que** les molécules de cage de cluster de fullerène sont les éléments de base, les molécules de cage de cluster de fullerène adjacentes sont reliées les unes aux autres par des liaisons covalentes pour former une structure de réseau régulièrement ordonnée, dans lequel aucun ion métallique n'est intercalé;
dans lequel le fullerène polymère bidimensionnel a une structure de couche mince, et son épaisseur est inférieure à 5 nm;
la cellule de ladite structure cristalline de fullerène polymère bidimensionnel comprend une structure hexagonale, ladite structure hexagonale comprend un fullerène central et six fullerènes latéraux, les fullerènes latéraux entourent le fullerène central, et sont disposés en forme hexagonale,
dans lequel les six fullerènes latéraux comprennent un premier fullerène latéral, un deuxième fullerène latéral, un troisième fullerène latéral, un quatrième fullerène latéral, un cinquième fullerène latéral et un sixième fullerène latéral, ledit fullerène central est relié à chacun ledit premier fullerène latéral, deuxième fullerène latéral, quatrième fullerène latéral et cinquième fullerène latéral par une liaison simple C-C respectivement, ledit fullerène central est relié à chacun ledit troisième fullerène latéral et sixième fullerène latéral par deux liaisons simples C-C respectivement, et les quatre atomes de carbone dans les deux liaisons simples C-C forment une structure annulaire à quatre membres; ou
la cellule de ladite structure cristalline de fullerène polymère bidimensionnel est une structure quasi-quadratique;
dans lequel, dans la cellule de la structure cristalline quasi-quadratique, il y a 8 clusters de fullerènes disposés autour de chaque cluster de fullerènes central, et les 8 clusters de fullerènes sont disposés selon une forme parallélépipède rectangle, et chaque cluster de fullerènes est situé à un sommet de le parallélépipède rectangle,
dans le quel, chaque cluster de fullerènes est relié à 4 clusters de fullerènes, chaque cluster de fullerènes est relié à 2 clusters de fullerènes par une simple liaison C-C respectivement, et est connecté aux 2 autres clusters de fullerènes reliés par les deux liaisons simples C-C respectivement, les quatre atomes de carbone dans les deux liaisons simples C-C forment une structure annulaire à quatre membres.

7. Fullerène polymère bidimensionnel selon la revendication 6, dans lequel, ledit fullerène polymère bidimensionnel est chimiquement stable et ne se décompose pas à la pression ambiante.

8. Procédé de préparation de fullerène polymère bidimensionnel, **caractérisé en ce que** le procédé de préparation est destiné à préparer le fullerène polymère bidimensionnel selon la revendication 6 ou 7, comprenant les étapes suivantes:
fournir du fullerène polymère intercalé de métal, et
remplacer des ions métalliques dans ledit fullerène polymère intercalé de métal par des sels d'ammonium quaternaire.

9. Procédé de préparation selon la revendication 8, dans lequel le fullerène polymère intercalé de métal est le fullerène polymère intercalé de métal selon l'une quelconque des revendications of revendications 1 à 4.

10. Procédé de préparation selon la revendication 8, dans lequel la formule structurale des sels d'ammonium quaternaire est la suivante: 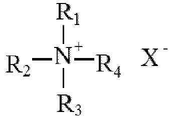 dans lequel R₁, R₂, R₃ et R₄ sont indépendamment choisis parmi les groupes alkyles contenant 1 à 8 atomes de carbone, x⁻ étant un ion salicylate, un ion fluor, un ion brome ou un anion 8-hydroxyquinoline ou d'autre anion ayant une capacité de coordination avec un ion métallique, ledit ion métallique étant un ion magnésium, un ion lithium, un ion potassium ou un ion sodium.

11. Application du fullerène polymère intercalé de métal selon l'une des revendications 1 à 4 et du fullerène polymère bidimensionnel selon la revendication 6 ou 7 dans les domaines des matériaux supraconducteurs, les transistors à effet de champ, l'électronique, la catalyse ou le stockage d'énergie.
